# EUROPEAN PATENT SPECIFICATION

(11) **EP 4 088 218 B1**
(45) Date of publication and mention of the grant of the patent: **27.08.2025**
(21) Application number: 20820791.0
(22) Date of filing: 16.11.2020
(51) Int. Cl.: G06V 20/13

(54) **METHOD AND SYSTEM FOR ANALYZING GEO-SPATIAL DATA TO DERIVE SPATIAL OBJECT REPRESENTATIONS**
VERFAHREN UND SYSTEM ZUM ANALYSIEREN VON GEO-RÄUMLICHEN DATEN ZUM ABLEITEN VON RÄUMLICHEN OBJEKTDARSTELLUNGEN
PROCÉDÉ ET SYSTÈME DESTINÉS À ANALYSER DES DONNÉES GÉOSPATIALES POUR DÉDUIRE DES REPRÉSENTATIONS D'OBJETS SPATIAUX

(43) Date of publication of application: 16.11.2022
(73) Proprietor: LiveEO GmbH, 10997 Berlin (DE)
(72) Inventor: PRZYWARRA, Sven, 10777 Berlin (DE); SEIDEL, Daniel, 14057 Berlin (DE); SAMU, David, 10409 Berlin (DE)
(74) Representative: Maikowski & Ninnemann Patentanwälte Partnerschaft mbB
(86) International application number: PCT/EP2020/082294
(87) International publication number: WO 2022/100871

(56) References cited:
- ZHAN QINGMING ET AL: "Quality assessment for geo-spatial objects derived from remotely sensed data", INTERNATIONAL JOURNAL OF REMOTE SENSING, vol. 26, no. 14, 1 July 2005 (2005-07-01), GB, pages 2953 - 2974, XP093245879, ISSN: 0143-1161, DOI: 10.1080/01431160500057764
- KIM J R ET AL: "3D RECONSTRUCTION FROM VERY HIGH RESOLUTION SATELLITE STEREO AND ITS APPLICATION TO OBJECT IDENTIFICATION", 1 January 2002 (2002-01-01), XP055825891, Retrieved from the Internet <URL:https://www.isprs.org/proceedings/xxxiv/part4/pdfpapers/420.pdf> [retrieved on 20210720]
- OEHMCKE STEFAN ET AL: "Detecting Hardly Visible Roads in Low-Resolution Satellite Time Series Data", 2019 IEEE INTERNATIONAL CONFERENCE ON BIG DATA (BIG DATA), IEEE, 9 December 2019 (2019-12-09), pages 2403 - 2412, XP033721418, DOI: 10.1109/BIGDATA47090.2019.9006251
- SOHN ET AL: "Data fusion of high-resolution satellite imagery and LiDAR data for automatic building extraction", ISPRS JOURNAL OF PHOTOGRAMMETRY AND REMOTE SENSING, AMSTERDAM [U.A.] : ELSEVIER, AMSTERDAM, NL, vol. 62, no. 1, 27 April 2007 (2007-04-27), pages 43 - 63, XP022051797, ISSN: 0924-2716, DOI: 10.1016/J.ISPRSJPRS.2007.01.001
- GECEN R ET AL: "ROAD DETECTION FROM HIGH AND LOW RESOLUTION SATELLITE IMAGES", 1 January 2008 (2008-01-01), XP055826173, Retrieved from the Internet <URL:https://www.isprs.org/proceedings/XXXVII/congress/4_pdf/62.pdf> [retrieved on 20210720]
- RAPIDEYE VERSION 4: "Satellite Imagery Product Specifications", 1 September 2012 (2012-09-01), XP055842233, Retrieved from the Internet <URL:https://earth.esa.int/documents/10174/896711/RE_Product_Specifications_ENG.pdf> [retrieved on 20210917]
- HOWE JONATHAN: "Solving SpaceNet Road Detection Challenge With Deep Learning | NVIDIA Developer Blog", 23 October 2020 (2020-10-23), XP055842465, Retrieved from the Internet <URL:https://web.archive.org/web/20201023061855/https://developer.nvidia.com/blog/solving-spacenet-road-detection-challenge-deep-learning/> [retrieved on 20210920]
- "Advances in Intelligent Data Analysis XIX", vol. 2626, 1 January 2003, SPRINGER INTERNATIONAL PUBLISHING, Cham, ISBN: 978-3-540-35470-3, ISSN: 0302-9743, article TRIAS-SANZ ROGER ET AL: "Automatic Bridge Detection in High-Resolution Satellite Images", pages: 172 - 181, XP055842449, 032528, DOI: 10.1007/3-540-36592-3_17
- AXMANN ROBERT ET AL: "Interactive Acquisition Scheduling for Low Earth Orbiting Satellites", 2010, XP055843959, Retrieved from the Internet <URL:https://mediatum.ub.tum.de/doc/823513/950531.pdf> [retrieved on 20210923]
- UNKNOWN: "Data Acquisition", DLR - EARTH OBSERVATION CENTER, 19 September 2020 (2020-09-19), XP055843963, Retrieved from the Internet <URL:https://web.archive.org/web/20200919220809/https://www.dlr.de/eoc/en/desktopdefault.aspx/tabid-5369/9017_read-16787/> [retrieved on 20210923]
- MOHANDES MOHAMED ET AL: "Classifiers Combination Techniques: A Comprehensive Review", IEEE ACCESS, vol. 6, 8 January 2018 (2018-01-08), pages 19626 - 19639, XP055844058, Retrieved from the Internet <URL:https://ieeexplore.ieee.org/ielx7/6287639/8274985/08335271.pdf?tp=&arnumber=8335271&isnumber=8274985&ref=aHR0cHM6Ly93d3cuZ29vZ2xlLmNvbS8=> DOI: 10.1109/ACCESS.2018.2813079

## Description

### Technical Field:

The proposed solution relates to a method and a system for analyzing geo-spatial data

### Prior Art:

In the field of monitoring widely distributed and loosely connected objects such as railway grids, electricity grids or oil and gas pipelines, today's solutions are still based on a plurality of manual processes. Thereby, monitoring by use of manpower turns out to be highly inefficient. Furthermore, it also entails an inefficient and error prone maintenance of said objects as necessary measures often are detected too late or even not at all. Thus, damages of said objects occur on a daily basis like power outages and wildfires due to vegetation growing too close to overhead lines or railway tracks. Ground disturbances next to railway tracks cause derailments and third-party interactions next to or on top of pipelines lead to leakages.

Besides an insufficient detection of necessary measures, manual inspection of railways or inspection of pipelines via helicopters leads to high costs and long reaction times which are disproportionate to the provided benefits.

Kim J. R. ET AL: "3D RECONSTRUCTION FROM VERY HIGH RESOLUTION SATELLITE STEREO AND ITS APPLICATION TO OBJECT IOENTIFICATION", 2002, XP055825891 discloses high-resolution satellite images which provide potentially useful information for the identification of individual surface objects such as trees and buildings compared with previous satellite image sources. The quality assessment of geo-spatial data is discussed in Zhan et al., Quality assessment for geo-spatial objects derived from remotely sensed data, International Journal of Remote Sensing Vol. 26, No. 14, 20 July 2005, 2953-2974.. Against this background there continues to exist a need for improved methods, systems and computer programs for analyzing geo-spatial data.

### Summary of Invention:

An improved method is provided by the method of claim 1, an improved system is provided by a system of claim 10 and an improved computer program is provided by the computer program of claim 21.

The proposed method comprises a processing of at least parts of geo-spatial data to derive spatial object representations and a collecting of further geo-spatial data if a quality condition of the spatial object representation is not fulfilled.

In general, the further geo-spatial data can be of the same kind as the previously processed geo-spatial data. Thus, further geo-spatial data of the same kind might be related to the same points on the Earth's surface and/or data which is recorded with the same measurement techniques. Thereby, geo-spatial data of the same kind might be necessary if points of the Earth's surface were covered partly or entirely during collection of the geo-spatial data. Such covering might be caused by temporary obstacles such as clouds. Alternatively, the further geo-spatial data can also be of a different kind. Exemplarily, further geo-spatial data of a different kind might be related to different points on the Earth's surface and/or different measurement techniques. After e.g. merging the further geo-spatial data with the previously processed geo-spatial data, the merged data can be considered as geo-spatial data, which is e.g. subjected to another quality condition check.

Throughout the whole document the term "object" refers to all kind of structures which can be located above or on or within the crust of the Earth as long as said objects can be allocated to points on the Earth's surface. Thereby, objects on the crust of the Earth can be allocated directly to at least one point on the Earth's surface at which it is located. For example, such objects might be railroads or constructions sites or trees or even certain areas. Objects above the crust of the Earth can be allocated to at least one point on the Earth's surface through a projection of the position above the crust onto the Earth's surface. Thereby, said projection is along a radial direction directed to the Earth's core. For example, such objects might be powerlines. In a similar manner, objects within the crust of the Earth can be allocated to at least one point on the Earth's surface through a projection onto the Earth's surface whereby said projection is along a radial direction away from the Earth's core. For example, such objects might be canalization or any kind of subsurface resources.

The term "geo-spatial data" refers to n-dimensional manifolds whereby each element of said manifolds is connected to one element of at least one n-dimensional chart. Each element of the at least one chart in turn is connected to a point on the Earth's surface.

In this context, points of the Earth's surface refer to a set of cells configured to represent at least a part of the Earth's surface. Such cells might have different geometrical shapes such as triangles or other polygons. Thereby the single cells within one set of cells do not necessarily have the same shape.

The connection between each chart element and the Earth's surface is represented by at least two of the n entries per chart element and might be given by longitude and latitude. Thus, the remaining n-2 entries of each chart element might contain information about the connected point on the Earth's surface. For example, such information can be data collected by one or more measuring techniques with respect to the respective point on the Earth's surface. Although, each manifold might be connected to a plurality of charts each element of one manifold is connected only to one point on the Earth's surface. In case that the geospatial data comprise a plurality of manifolds every single manifold can be connected in parts or entirely to the same points on the Earth's surface. Such manifolds might contain information acquired with different measurements. Alternatively, the different manifolds might refer to disjoint sets of points on the Earth's surface.

Aim of the processing is to derive geo-spatial object representations from the geo-spatial data. Thereby, geo-spatial object representations represent certain objects located above or on or within the crust of the Earth. Although, the spatial object representations inherit said connection to the Earth's surface from the geo-spatial data, this does not necessarily mean that said points to which the spatial object representations are connected, are identical with the points the geo-spatial data are connected to.

For example, the processing can derive spatial object representations representing information only about a part of the points the geo-spatial data are connected to.

Additionally or alternatively the processing can derive spatial object representations representing information for intermediate points which are connected to points on the Earth's surface in-between that points the geo-spatial data are connected to. And further, additionally or alternatively the processing can derive spatial object representations representing information for the same points the geo-spatial data are connected to.

The quality condition of the spatial object representations contains information about the condition of the spatial object representation or the geo-spatial data the spatial object representation are derived from. That information about the geo-spatial data can be related to metadata of the geo-spatial data and might include information about the resolution of the geo-spatial data or the date of recording. The quality condition can also be directed to information of single points the spatial object representations or the geo-spatial data are connected to as well as to any kind of sets of said points. Furthermore, the quality condition can comprise a plurality of information about the spatial object representation or the geo-spatial data. In this case each information comprised by the quality condition is referred to as element of the quality condition.

Exemplarily, the quality condition might contain information about spatial relationships of different spatial object representations. In particular, that information might directed to the distance of different object representation such a trees or construction sites being located close to a railroad or pipeline.

In general, the quality condition can comprise information about a point-by-point quality of said spatial object representations. In another example, the quality condition can comprise information about a general or average quality of said spatial object representations. Such general quality might refer to a connection of the spatial object representations to some certain points of interest or a set of certain points.

For example the general the point-by-point quality might refer to the distance of every point of interest to the closest tree. In another example the average quality might refer to a kind of spatial resolution of the point of interests. In yet another example the general quality might refer the minimal distance of any tree to one of the point of interests.

In contrast to manual approaches the proposed method offers the possibility to be implemented in fully automated way. Thus, by automatically analyzing the derived spatial object representations it can be ensured that a certain quality condition of the derived spatial object representations is fulfilled. A cycle of collecting and processing can be automatically repeated to derive spatial object representations fulfilling the quality condition.

This fully automatable method results in an increased effectiveness of monitoring large scale assets or widely distributed objects, respectively. Simultaneously, the costs per monitored unit are reduced as well as the probability that the derived spatial object representations are erroneous. Thereby, the high degree of digitalization improves accessibility of the derived spatial object representations for possible users or post-processing applications. Exemplary post-processing application can include risk analysis regarding the probability a certain object might cause a negative effect for a person or another object. In particular, this can refer to a probability that vegetation in bad condition will block railways in a nearer future. Besides, the proposed method also leads to a high usability for a large number of different spatial object representations.

In an exemplary embodiment the processing derives said spatial object representations from image data of at least one object whereby the image data show a part of the Earth's surface. Thereby, image data of objects may also comprise data of objects which are located above or within the crust of the Earth. Objects under the Earth's surface may be imaged by use of surface penetrating measurement techniques such as synthetic-aperture-radar.

Image data are not limited to images in the meaning of photography but include all kind of data sets whereby each element of the data set is an n-dimensional array. Regardless of the dimensionality, the elements of the image data are referred to as pixel. Thereby, each element of each pixel can be identified with information such as a position of the respective pixel, a time of recording, a wavelength of a detected electromagnetic radiation or information regarding an intensity or a phase shift of the electromagnetic radiation.

Further, image data in the meaning of the proposed solution also comprises videos as any video can be divided into single frames corresponding to the above-mentioned image data.

In one embodiment said object representations derived by the processing are spatially distributed but not necessarily connected object representations. This means, that derived spatial object representations might be connected to distributed but not necessarily adjacent points on the Earth's surface. Some of the points might be groupable whereby all points of one group are adjacent to at least one other point of the group. However, it is also possible that none of the points is adjacent to another point. In this regard two points of the spatial object representations are adjacent if there is no point of the geo-spatial data in between the two points of the spatial object representations.

Exemplarily, the object representations represent at least in parts stationary and / or moving objects. In one embodiment stationary objects might be pipelines, powerlines, railways, roads, buildings, mining sites, dams, construction sites, industrial facilities or vegetation. Moving objects might be vehicles or any kind of production goods or finished goods. Such goods comprise wood, coal, ore, precast concrete parts and pipes.

Thereby the object representations can contain data about construction states, a geological nature, certain materials or a number of certain objects. In particular, the object representations can contain data about the type and the state of vegetation, whereby the state can refer to a probability to withstand a certain wind strength or can refer to a water content of the vegetation. It is also possible that the object representations can contain data about whether the underlying point on the Earth's surface is built-up or undeveloped. Further, it is possible that the object representations can contain data about the existence of certain materials in the ground such as water. Beyond that, it might be possible to determine the area of an agriculture or silviculture region as well as a vegetation density in order to determine an expected yield. Additionally, it might be possible to determine the amount of harvested agriculture or silviculture goods stored on the ground.

For this purpose, embodiments of the method can use an artificial intelligence technique for processing the geo-spatial data. In one embodiment artificial neural networks are used. Thus, the processing can be configured to be trainable with respect to the capability of deriving spatial object representations from the geo-spatial data. The use of an artificial intelligence technique can entail the benefit of continuous improvement of the processing quality which refers to the probability with which the derived geo-spatial data correspond to the represented objects. This correspondence to a confidence value of the derived spatial object representations. According to the proposed solution this confidence value is part of the quality condition.

Furthermore, according to the proposed solution, said confidence value will be calculated by comparing a plurality of spatial object representations of the same object derived with a plurality of techniques. Thereby, small differences between said different spatial object representations point to a large confidence value and vice versa. Exemplarily, the confidence value is given in times of a standard deviation between the different spatial object representations which are derived by different techniques. Thereby, the standard deviation can be calculated as point-by-point value referring to the confidence of the spatial object representations regarding every single point or can be calculated as an average value referring to the confidence of the spatial object representations regarding a set of points.

In general, a standard deviation can be reduced by increasing the number of independent measurements. Thus, the proposed method might be configured to record geo-spatial data with a plurality of different measurement techniques for at least one point on the Earth's surface in order to increase the confidence value of spatial object representations associated with the at least one point. Exemplarily, different measurement techniques might refer to using different sensors with different wavelengths.

In an additional or alternative embodiment, the quality condition comprises a resolution of the geo-spatial data or the spatial object representation.

In another additional or alternative embodiment, the quality condition comprises a date. Thereby, the date is a date of recording the geo-spatial data from which the spatial object representations are derived.

In yet another additional or alternative embodiment the quality condition comprises an extension. Thereby the extension is a spatial extension of a grid the geo-spatial data or spatial object representations are distributed on. In this embodiment the grid of the spatial object representation represents the set of all points the geo-spatial data or spatial object representations are connected to.

The quality condition can be subject to at least one verifiable constraint. In one example, if the quality condition comprises the resolution this means that it can be checked whether the resolution of the geo-spatial data or the spatial object representation is finer than or identical to a threshold resolution. Otherwise, quality condition would not be fulfilled.

In another example, if the quality condition comprises the date of recording this means that it can be checked whether the date of recording is younger than or identical to a threshold date. Otherwise, quality condition would not be fulfilled.

In yet another example, if the quality condition comprises the spatial extension this means that it can be checked whether the spatial extension is larger than or identical to a threshold extension. Otherwise, quality condition would not be fulfilled.

The above-mentioned different elements of the quality condition are not mutually exclusive. In some cases, an embodiment comprises a quality condition with a plurality of elements each element is subject to at least one verifiable constraint. Thus, each element can be compared to at least one associated threshold.

In an exemplarily embodiment, the quality condition of the spatial object representations is fulfilled only if all constraints are verified. In such an embodiment the above-mentioned resolution of the geo-spatial data as well as a confidence value of the spatial object representations can be used. In this case only if the resolution of the geo-spatial data is at least as high as a resolution threshold and a confidence value of the spatial object representations is at least as high as a confidence threshold value, the quality condition is fulfilled.

In another embodiment some or all of the at least one threshold can be changed. In an exemplary embodiment of the method, the quality condition includes the resolution of the geo-spatial data as well as the resolution of the spatial object representations. In this case the resolution threshold of the spatial object representations can be set relative to the resolution of the geo-spatial data.

In particular, the at least one threshold can be changed if a plurality of cycles of collecting and processing is performed. In one example, the plurality of cycles changes one or more threshold with each iteration. In an exemplary embodiment the resolution threshold of the geo-spatial data can be changed to increasingly finer resolutions with each iteration. Further exemplarily, different geo-spatial data can be collected in each iteration. Thus, coarse resolved satellite data can be used to derive coarse resolved objection representations of a large area in a first iteration. Subsequently, finer resolved data of unmanned aerial vehicles (UAVs) can be used to derive finer resolved spatial object representation of part of the large area. However, in each iteration the resolution of the collected geo-spatial data can be verified to reach at least an iteration specific resolution threshold.

In another embodiment the method comprises a plurality of constraints whereby at least two constraints are directed to different spatial object representations. Exemplarily, one constraint might be directed to a date when a large-scale asset or a region comprising a plurality of objects is recorded. In this case, another constraint might be directed to a part of said large scale asset or said region, i.e. certain points of interest. Thus, the constraint of the point of interests might be fulfilled independently from the constraint of said large scale asset or said region.

Thus, in a first aspect, the proposed method might be configured to permanently monitor the large region or the large-scale asset by checking whether the geo-spatial data of said large region or said large scale asset are never outdated. Otherwise further geo-spatial data are collected of said large region or said large scale asset. In another aspect, the same embodiment might check whether any spatial object representations of a certain kind of objects, e.g. trees near railroads, are collected as part of the afore mentioned data and if they are sufficiently identifiable. However, if spatial object representations of the certain kind of objects are collected without being sufficiently identifiable, further geo-spatial data of said spatial object representations are collected. Thereby, the permanent monitoring of the large region or the large-scale asset is continued even if the spatial object representations of the certain kind of objects fulfill their constraint.

In a further development of any of the above-mentioned embodiments the proposed method can comprise a determining of geo-spatial data to be replaced if at least parts of the spatial object representations do not fulfill the quality condition. Thereby the geo-spatial data to be replaced are defined such that they are the part of the geo-spatial data from which the spatial object representations are derived which does not fulfill the quality condition.

In another embodiment the proposed method can comprise an estimating of a set of quality parameters of the geo-spatial data. Thereby, said quality parameters are defined such that spatial object representations derived from geo-spatial data exhibiting said quality parameters fulfill the quality condition.

In particular, embodiments can be configured to detect the causative parts of the geo-spatial data leading to spatial object representations which do not fulfill the quality condition via the determining. Additionally, embodiments might also comprise the estimating in order to estimate the quality parameters which, if said causative parts of the geo-spatial data would comprise said quality parameters, would lead to spatial object representations which fulfill the quality condition. In particular, these quality parameters can be used to collect further geo-spatial data exhibiting said quality parameter.

In a further development the proposed method comprises a complementing of the geo-spatial data and / or a replacing the geo-spatial data to be replaced with geo-spatial data in response that further geo-spatial data are collected. In particular, the further geo-spatial data can exhibit the estimated quality parameters. Thus, by complementing and / or replacing the spatial object representations can be automatically improved such that the quality condition is fulfilled. In particular, if it turns out that some given geo-spatial data are insufficient to derive spatial object representations fulfilling the quality condition, the amount of geo-spatial data which have to be collected to replace or complement the given geo-spatial data can be reduced by estimating the specific quality parameters needed to fulfill the quality condition. Thus, collecting redundant or irrelevant geo-spatial data which are not suited to improve the spatial object representations can be avoided.

In order to realize a high degree of automation the collecting of geo-spatial data can include an automated initiating of geo-spatial data collection means. Thereby the geo-spatial data collection means are automatically initiated to collect geo-spatial data as result that at least parts of the spatial object representations do not fulfill the quality condition.

In one embodiment of the proposed solution the geo-spatial data represent gravimetric or electromagnetic measurements. In particular the geo-spatial data are data obtained by LIDAR measurements and/or optical measurements and/or RADAR measurements and/or multispectral measurements and/or hyperspectral measurements.

Exemplarily, the geo-spatial data might be collected by at least one of the following list: An UAV, a satellite, a plane, a helicopter, a balloon, a high-altitude pseudo satellite (HAPS). Embodiments can also be configured to use a combination of the afore mentioned collection methods. Thereby, geo-spatial data of different areas can be collected by different collection methods. Thus, the collection of geo-spatial data can be carried out in an area adapted manner which might be more effective than using only one collection method. In particular, if the collected data is meant to replace some geo-spatial data to be replaced. Thereby, using a combination of UAV, satellite and plane data some emergence effects can occur. In one exemplary embodiment it is possible to use satellite data to provide spatial object representations of large areas with low resolution. In this context low resolution refers to a resolution leading to spatial object representations of a resolution which is too low for a given post-processing application. In a next step processing might reveal a kind of relevant spatial object representations such as vegetation in bad condition to be present only in some subareas. In a further subsequent step, it is checked whether the quality condition is fulfilled. Thus, it could be the result that due to the reduced resolution of the geo-spatial data the spatial object representations are also provided in a resolution lower than a resolution threshold. Via determining, the parts of the spatial data connected to said subareas would be determined to be spatial data to be replaced. Further, the estimating can provide quality parameters indicating a resolution of geo-spatial data which would be necessary to derive spatial object representations with the predetermined resolution. Now, exemplarily by initiating UAVs the method can collect geo-spatial data of higher resolution only of the subareas in which the relevant spatial object representations are detected by use of the primary satellite-based data. Thus, the proposed method can provide a detailed evaluation simultaneously avoiding unnecessary and expensive large-scale aircraft or helicopter overflights or manual testing. Thereby, the proposed method is fully automatable.

In an additional or alternative embodiment the proposed method further comprises training processing means. For that purpose a training data set can be used which comprises geo-spatial data with associated spatial object representations, corresponding to a supervised learning approach. In one embodiment the training data set can be provided via a validation of at least parts of the spatial object representations by a user. Thus, the user can use digital devices such as smartphones or laptops to validate whether spatial object representations coincide with objects of the connected point on the Earth. Consequently, the spatial object representations can be validated also via input from a mobile device application on-site. By comparing the derived spatial object representations with ground-level user data, it is possible to provide further training data sets to further improve the quality of the processing.

In an alternative or additional step of providing the training data set, the geo-spatial data can be manually associated with spatial object representations. The manually associated spatial object representations might be directed to any objects according to the introduced definition. In this regard, the manual association of spatial object representations to geo-spatial data is referred to as manual annotation.

According to the proposed system, the system comprises a processing means configured to derive spatial object representations from at least parts of geo-spatial data and an analyzing means configured to test whether a quality condition of said spatial object representations is fulfilled. Furthermore, the system comprises a geo-spatial data collection means which is configured to collect the geo-spatial data if said quality condition is not fulfilled.

In general, all connections referred to can be wired as well as wireless connections as long as they are configured to exchange signals and/or digital data. Thereby, wireless conection might entail the possibility to realize delocalized systems whereby at least one component of the system is spatially separated from at least one other component. Additionally, all embodiments of the proposed method and benefits thereof also apply to the proposed system.

Furthermore, the need for an improved method and system for analyzing geo-spatial data is also met by a computer program for analyzing geo-spatial data. The proposed computer program can be stored on a storage means of a computer and comprises machine code instructions executable by a processor of the computer. If the processor executes the machine code instruction it causes the computer to perform a method as claimed in any of the above-mentioned embodiments.

In general, the proposed computer program might be stored on a storage means of a single computer and executed on a processor the single computer. However, it can also be stored and/or executed on a plurality of computers in parallel or via serverless computing. Additionally, all embodiments of the proposed method and benefits thereof also apply to the proposed computer program.

### List of Figures:

The invention will now be described, by way of examples, with reference to the accompanying drawings, in which:
- Figure 1: shows a first embodiment of a proposed system comprising a processing means, an analyzing means and a geo-spatial data collection means;
- Figure 2: shows a schematic representation of spatial object representations as derived via the processing means from the geo-spatial data;
- Figure 3a: shows a schematic representation of spatial object representations as derived from geo-spatial data of a low resolution;
- Figure 3b: shows the schematic representation of spatial object representations for the same area as shown in figure 3a but derived from geo-spatial data of a high resolution;
- Figure 4a: shows a schematic representation of spatial object representations as derived from geo-spatial lacking information about some potentially interesting areas;
- Figure 4b: shows a schematic representation of spatial object representations for the same area as shown in figure 4a but complemented by the potentially interesting areas;
- Figure 5a: shows a schematic representation of spatial object representations as derived from geo-spatial data of a low resolution with a highlighted area connected to geo-spatial data to be replaced;
- Figure 5b: shows a schematic representation of spatial object representations for the same area as shown in figure 5a whereas spatial object representations in the area connected to the geo-spatial data to be replaced are derived from geo-spatial data of high resolution;
- Figure 6: shows a further embodiment of the proposed system;
- Figure 7: shows a first embodiment of the proposed method comprising processing of geo-spatial data to derive spatial object representations and collecting further geo-spatial data if a quality condition is not fulfilled;
- Figure 8: shows a second embodiment of the proposed method whereby the quality condition comprises metadata of the geo-spatial data;
- Figure 9: shows a third embodiment of the proposed method whereby the metadata of the geo-spatial data and / or the spatial object representations are subject to a constraint;
- Figure 10: shows a forth embodiment of the proposed method whereby the metadata of the geo-spatial data and / or the spatial object representations are subject to a plurality of constraints;
- Figure 11: shows a fifth embodiment of the proposed method using a plurality of processing techniques;
- Figure 12: shows a seventh embodiment of the proposed method comprising a step of estimating quality parameters of the geo-spatial data;
- Figure 13: shows a sixth embodiment of the proposed method comprising a step of determining geo-spatial data to be replaced;
- Figure 14: shows a eighth embodiment of the proposed method comprising the determining geo-spatial data to be replaced as well as the estimating quality parameters;
- Figure 15: shows a ninth embodiment of the proposed method comprising a step of training;
- Figure 16: shows a tenth embodiment of the proposed method comprising a step of validation of spatial object representations by a user; and
- Figure 17: shows a eleventh embodiment of the proposed method comprising a step of manually providing annotations.

### Detailed Description:

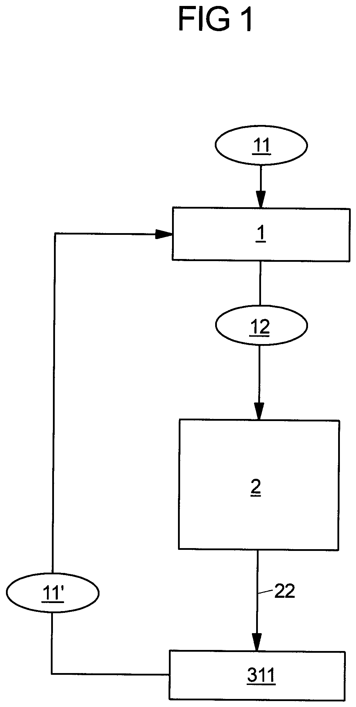

Figure 1 shows a first embodiment of a system comprising a processing means 1, an analyzing means 2 and a geo-spatial data collection means 311. Thereby, the processing means 1 is connected to the analyzing means 2 as well as to the geo-spatial data collection means 311 and configured to derive spatial object representations 12 from at least parts of geo-spatial data 11 provided via the geo-spatial data collection means 311. Furthermore, the analyzing means 2 is configured to receive the spatial object representation 12 of the processing means 1, to test whether a quality condition of said spatial object representations 12 is fulfilled and to initiate a collecting of further geo-spatial data 11' via the geo-spatial data collection means 311 if said quality condition is not fulfilled. The further geo-spatial data 11' can be of the same or of a different kind as the previously processed geo-spatial data 11. After e.g. merging the further geo-spatial data 11' with the previously processed geo-spatial data 11, the merged data can be considered as geo-spatial data 11, which is e.g. subjected to another quality condition check.

In an exemplary embodiment the analyzing means 2 might be configured to send a signal 22 to the geo-spatial data collection means 311 and the geo-spatial data collection means 311 might be configured to collect further geo-spatial data 11' if the signal 22 is received.

Here, objects refer to structures located above or on or within the crust of the Earth. In general, the geo-spatial data 11 and/or the further geo-spatial data 11' refer to n-dimensional manifolds whereby each point of said manifolds is directly or indirectly connected to one point on the Earth's surface. Every single manifold of the plurality of manifolds can be connected in parts or entirely to the same points on the Earth's surface or refer to disjoint sets of points on the Earth's surface.

In some embodiments the geo-spatial data 11 and/or the further geo-spatial data 11' are collected by gravimetric or electromagnetic measurements. In particular, the geo-spatial data 11 and/or the further geo-spatial data 11' are obtained by LIDAR measurements and/or optical measurements and/or RADAR measurements and/or multispectral measurements and/or hyperspectral measurements.

Embodiments might be configured to collect geo-spatial data 11 by different measurements than the further geo-spatial data 11'. In particular, the geo-spatial data 11 and further geo-spatial data 11' might be collected by electromagnetic measurements of different wavelengths. Alternatively, the geo-spatial data 11 might be collected by an electromagnetic measurement with a wavelength in the visible portion of the spectrum while the further geo-spatial data 11' are collected via RADAR. In alternative embodiment, geo-spatial data 11 and further geo-spatial data 11' are collected by different geo-spatial data collection means 311 within the same collection iteration.

The spatial object representations 12 which are derived from the geo-spatial data 11 and/or the further geo-spatial data 11' represent said objects. Thereby, objects above or on or within the crust of the Earth can be allocated directly to at least one point on the Earth's surface at which it is located.

As the geo-spatial data 11 and/or the further geo-spatial data 11' contain information about points on the Earth's surface the spatial object representations 12 inherit said connection to the Earth's surface from the geo-spatial data 11 and/or the further geo-spatial data 11'. This does not necessarily mean that said points to which the spatial object representations 12 are connected are identical with the points the geo-spatial data 11 and/or the further geo-spatial data 11' are connected to. For example, the spatial object representations 12 might be connected only to a part of the points the geo-spatial data 11 and/or the further geo-spatial data 11' are connected to. Additionally or alternatively the spatial object representations 12 might be connected to intermediate points representing points on the Earth's surface which are adjacent to at least two of the points the geo-spatial data 11 and/or the further geo-spatial data 11' are connected to. And further, additionally or alternatively the spatial object representations 12 might be connected to the same points the geo-spatial data 11 and/or the further geo-spatial data 11' are connected to.

The quality condition can comprise information about a point-by-point quality of said spatial object representations 12. In another example, the quality condition can comprise information about a more general or average quality of said spatial object representations 12.

In some embodiments the quality condition can also comprise metadata 11a of the geo-spatial data 11 and/or the further geo-spatial data 11'. Thus, even before the spatial object representations 12 are derived it might be tested whether the quality condition is fulfilled.

The quality condition can be subject to at least one verifiable constraint 21. Exemplary, via the constraint 21 it can be tested whether a resolution of the geo-spatial data 11 and/or the further geo-spatial data 11' or the spatial object representation 12 is finer than or identical to a threshold resolution. Otherwise, the quality condition is not fulfilled.

Further, the quality condition can also contain a plurality of constraints 21a, 21b, 21c. In one embodiment only if all constraints are verified the quality condition of the spatial object representations 12 is fulfilled. The plurality of constraints 21 has not necessarily to be verified sequentially. Embodiments of the proposed system might also verify all or some of the plurality of constraints 21 at the same time. Thereby, the proposed system is not limited to a certain number of constraints 21.

The quality condition might comprise a date. Thereby, the date is a date of recording the geo-spatial data 11 and/or the further geo-spatial data 11' from which the spatial object representations 12 are derived. This means that via the quality condition it is tested whether the date of recording is younger than or identical to a threshold date. Otherwise, the quality condition would not be fulfilled.

In yet another additional or alternative embodiment the quality condition comprises an extension. Thereby the extension is a spatial extension of a grid the geo-spatial data 11 and/or the further geo-spatial data 11' or spatial object representations 12 are distributed on. In this embodiment the grid represents the set of all points the geo-spatial data 11 and/or the further geo-spatial data 11' or spatial object representations 12 are connected to.

However, if an embodiment comprises a quality condition with a plurality of verifiable constraints 21, the quality condition S2 might only be fulfilled if all constraints 21 are verified.

In general, the number of analyzing means 1, processing means 2 and geo-spatial data collection means 311 are not limited. Furthermore, all connections referred to can be wired as well as wireless connections as long as they are configured to exchange signals and/or digital data. Thereby, wireless connection might entail the possibility to realize delocalized systems whereby at least one component of the system is spatially separated from at least one other component. In an exemplary embodiment, the analyzing means 1 and/or the processing means 2 might be located at different computer centers.

Furthermore, the processing means 1 and/or the analyzing means 2 of the proposed system might provide a user interface in order to enable a user to request and receive spatial object representations 12 and/or quality conditions. For that purpose, in an exemplary embodiment, the user interface is connected to the processing means 1 and configured to transmit a request signal specifying the requested spatial object representation 12 which are referred to as requested data. In yet another embodiment, the system comprises a storage for storing derived spatial object representations 12. Thus, the user interface might be connected with said storage.

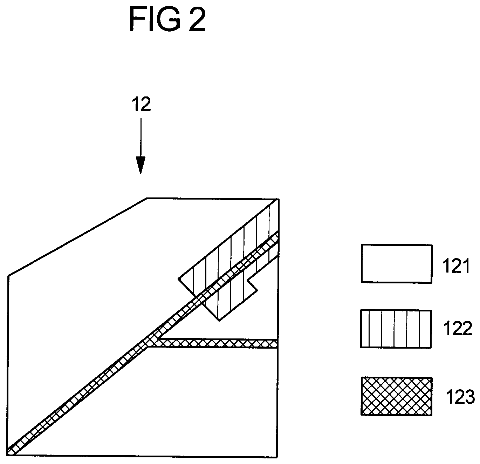

In figure 2 a schematic representation of spatial object representations 12 is shown as they are derived based on the geo-spatial data 11 and/or the further geo-spatial data 11'. Thereby, the shown spatial object representations 12 are connected to points on the Earth's surface whereby the entirety of said points form an area of a convex pentagon. The spatial object representations 12 in the shown example illustrates the combined information about the existence of constructions, vegetation and the state of the latter. For that purpose the spatial object representations 12 can be interpreted as vector field which allocates a vector to every point of the pentagon. Thus, different entries of the vectors encode the information whether the point the vector is allocated with, contains constructions or vegetation and in the case, vegetation is present if it is in good or bad condition. However, for the sake of simplicity the vector field underlying figure 2 is reduced to the three classes of spatial object representations 121, 122, 123. Thus, the spatial object representations 12 are divided into three subgroups 121, 122, 123 each representing a different object. A first group 121 indicated by a white filling represents points on which mainly vegetation in good condition is present. A second group 122 indicated by a vertical hatching represents points on which mainly vegetation in bad condition is present. A third group 123 indicated by a crossed hatching represents points which comprise constructions.

Thus figure 2 shows one mostly linear construction 123 mostly embedded in vegetation of good condition 121 but accompanied by a small area of vegetation of bad condition 122 in the upper right corner of the pentagon.

Thereby, the entirety of points the spatial object representations 12 are connected to, is not limited to form the exemplary shown pentagon. It is not even limited to form a connected area.

In another embodiment of the proposed system at least two different spatial object representations are derived which are connected at least in parts to the same points on the Earth's surface. For that purpose different techniques might be applied to the same geo spatial data 11 and/or different geo-spatial data 11 of the same points might be used. Thus, an average spatial object representation 12 might be provided. The average spatial object representation 12 is not necessarily an arithmetic average. In some embodiments the average spatial object representation 12 can be a weighted mean value of the different spatial object representations. However, in principle the average spatial object representation 12 only refers to a mathematical object which is derived from the plurality of different spatial object representations. Thereby, the mathematical object is not limited to be result of a linear mapping.

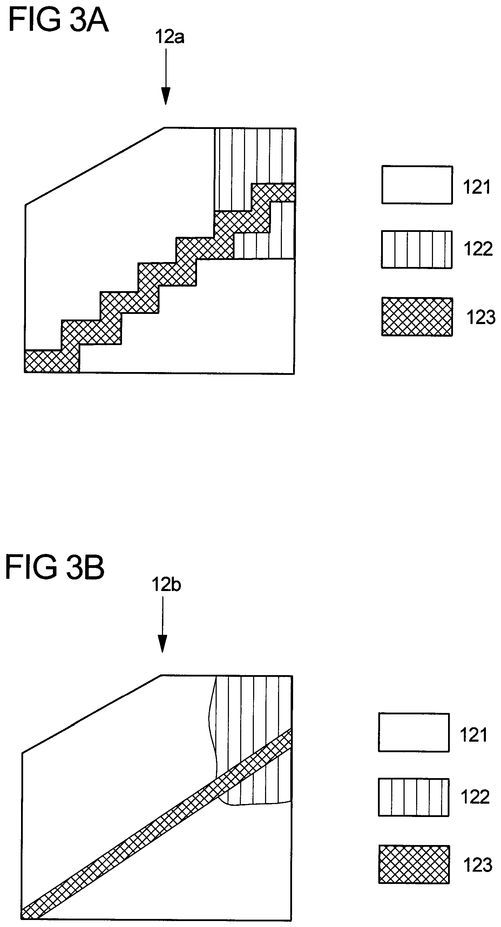

Figure 3a shows a schematic representation of first spatial object representations 12a resembling figure 2. Thereby, the shown first spatial object representations 12a are derived from geo-spatial data 11 of low resolution causing also the first spatial object representations 12a to be of low resolution. Although the low-resolution spatial object representations 12a might be not sufficient for applying post-processing analyses, the low resolution geo-spatial data 11 from which the spatial object representations 12a are derived, can be available for large areas via satellite or plane-based measurements. However, the resolution quality condition of the spatial object representations 12a is not fulfilled. Thus, further geo-spatial data 11' has to be collected. Particularly, this happens automatically by sending the signal 22 from the analyzing means 2 to the geo-spatial data collection means 311. Again, the spatial object representations 12a are divided into three subgroups 121, 122, 123 each representing the above-mentioned different objects.

Figure 3b shows a schematic presentation of second spatial object representations 12b derived from the further geo-spatial data 11' which are collected with a higher resolution than in figure 3a. This causes also the spatial object representations 12b and the subgroups thereof 121, 122, 123 to be of high resolution. Those kind of spatial object representations 12b can exemplarily be derived from unmanned aerial vehicle (UAV) measurements.

Alternatively or additionally the proposed system might comprise an estimation means 25, which is connected to the analyzing means 2 and the geo-spatial data collection means 311. Thereby, said estimation means 25 is configured to receive the signal 22 of the analyzing means 2 and to estimate, if the signal 22 is received, a set of quality parameters 251 of the geo-spatial data 11 and/or the further geo-spatial data 11' such that spatial object representations 12 derived from geo-spatial data 11 exhibiting said quality parameters 251 fulfill the quality condition. Furthermore, the estimation means 25 can be configured to send the quality parameters 251 to the geo-spatial data collection means 311 whereby the geo-spatial data collection means 311 is configured to collect further geo-spatial data 11' corresponding to the quality conditions 251 if quality conditions 251 are received. Alternatively or additionally, the geo-spatial data collection means 311 is configured to collect further geo-spatial data 11' if a signal 22 is received which might be send by the analyzing means 2 or the estimation means 25.

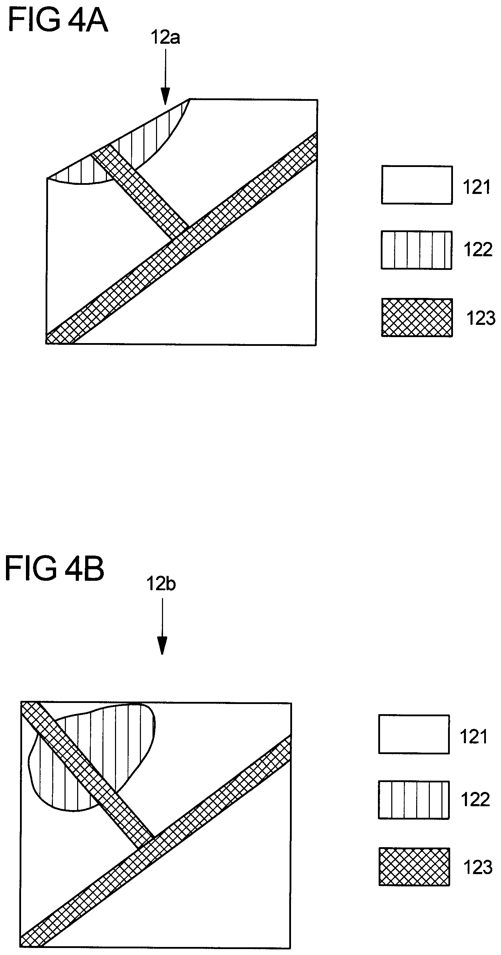

In figure 4a a schematic representation of spatial object representations 12a as derived from geo-spatial 11 lacking information about a potentially interesting area with vegetation of bad condition 122 in the vicinity of a construction 123 are shown. Exemplarily, such a lack of information might be caused by a temporary obstacle such as clouds. Thereby, the area the spatial object representations 12a are connected to limits any post-processing procedure such as risk-analysis. However, it is indicated that the covered area has to be extended at the upper left corner of the pentagon shown in figure 4a. The minimal distance of any vegetation in bad condition 122 together with an associated threshold is used as constraint 21. Thereby, the shown vegetation in bad condition 122 in peripheral position does not reach the threshold. Thus, the quality condition is not fulfilled and the proposed system initiates the collection of further geo-spatial data 11'. This may happen automatically.

In an exemplarily embodiment, the temporal obstacle itself can be captured as object in order to determine whether collecting further geo-spatial data 11' might be promising. Regarding clouds causing a lack of information, additional information such as weather forecast might be included to decide at which time the further geo-spatial data 11' might be collected. This may happen automatically.

Figure 4b refers to spatial object representations 12b which are extended in the afore mentioned manner complementing the covered area of figure 4a to represent a square surface. By the additional coverage the whole subarea comprising vegetation in bad condition 122 is apparent.

In a further embodiment the proposed system might comprise a determining means 24. The determining means 24 can be connected to the analyzing means 2 as well as the geo-spatial data collection means 311 and configured to receive the signal 22 from the analyzing means and to determine, if the signal 22 is received, geo-spatial data to be replaced 241. Thereby the geo-spatial data to be replaced 211 represent the part of the geo-spatial data 11 and/or the further geo-spatial data 11' from which the spatial object representations 12 are derived which does not fulfill the quality condition. Furthermore, the determining means 24 can be configured to send the geo-spatial data to be replaced 241 to the geo-spatial data collection means 311 whereby the geo-spatial data collection means 311 is configured to collect further geo-spatial data 11' corresponding to the geo-spatial data to be replaced 241 if geo-spatial data to be replaced 241 are received. Alternatively or additionally, the geo-spatial data collection means 311 is configured to collect further geo-spatial data 11' if a signal 22 is received which might be send by the analyzing means 2 or the estimation means 25 or the determining means 24.

In particular this means that embodiments via the determining means 24 can be configured to detect the causative parts of the geo-spatial data 11 leading to spatial object representations 12 which do not fulfill the quality condition. Thus, the part of the geo-spatial data 11 which has to be replaced can be reduced.

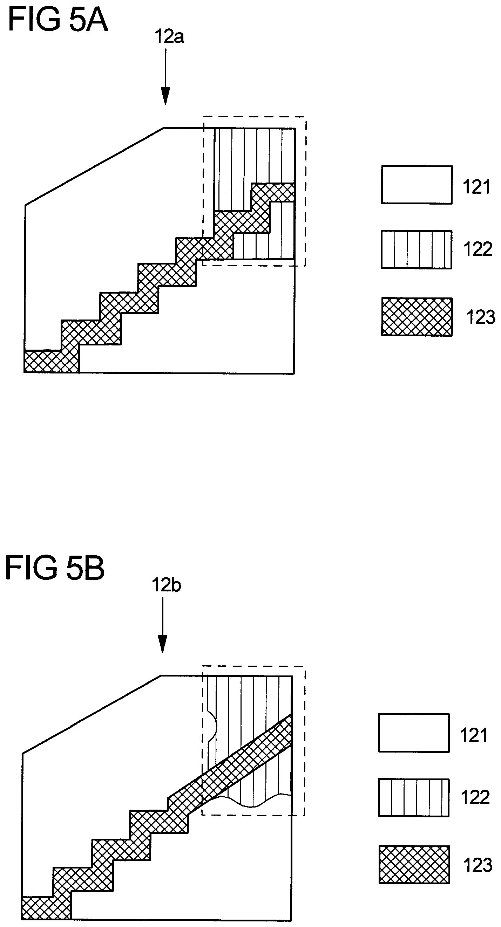

Figure 5a shows the same area and the same spatial object representations 12a as figure 4a. However, in this case the resolution of vegetation in bad condition 122 together with an associated threshold is used as constraint 21. As vegetation in bad condition 122 is detected but the resolution of the spatial object representations 12a on the whole area is low, the quality condition is not fulfilled. As indicated by dashed lines, the determination means 24 determines spatial data to be replaced 241. Thereby, the geo-spatial data to be replaced 241 are defined via the marked spatial object representations 12a which do not reach the threshold and which are derived from the spatial data to be replaced 241. Thus, the proposed system initiates the collection of further geo-spatial data 11' for the marked area which can be performed automatically exemplarily by sending the signal 22 from the determination means 24 to the geo-spatial data collection means 311.

In figure 5b the same area as in figure 5a is shown. In contrast to figure 5a the geo-spatial data to be replaced 241 are replaced by further geo-spatial data 11' of higher resolution. Thus, the spatial object representations 12b exhibit a higher resolution in the marked area. Here, all vegetation in bad condition 122 is shown with high resolution for which reason the quality condition is fulfilled.

In an alternative embodiment the whole area shown in figure 5a and figure 5b might be subject to another constraint 21 than the vegetation in bad condition 122. Thereby, the constraint 21 of vegetation in bad condition 122 might be a resolution with an associated threshold and might be checked independently of the constraint 21 of the whole area. The constraint 21 regarding the whole area might be the date of recording which must not be more than a certain number of weeks ago.

Thus, as the constraint regarding the whole area is checked for all time the embodiment is configured to permanently monitor the whole area with a resolution which might be lower than a resolution necessary to perform risk analysis but high enough to enable the processing S1. On the other hand, the embodiment is configured to identify vegetation in bad condition 122 and automatically provide high resolved data of those spatial object representations 12. In particular this means, that the monitoring of the whole area will not be finished if the constraint 21 of the vegetation in bad condition 122 is checked successfully.

In another embodiment the processing means 1 of the proposed system might be configured to receive a training data set 41. Thereby, the training data set 41 comprises geo-spatial data 11 with associated spatial object representations 12 and can be used to train the processing means 1. In an exemplary embodiment, the processing means 1 might comprise a user interface in order to receive the training data set 41.

In one embodiment the training data set 41 can be provided via a validation of at least parts of the spatial object representations 12 by a user. Thus, the user can use digital devices such as smartphones or laptops to validate whether spatial object representations 12 coincide with the represented objects on the Earth's surface. Consequently, the spatial object representations 12 can be validated via input from a mobile app on-site. By comparing the derived spatial object representations 12 with ground-level user data, it is possible to provide further training data sets 41.

In general, the number of the determination means 24 and the estimation means 25 are not limited. Furthermore, all connections referred to can be wired as well as wireless connections as long as they are configured to exchange signals and/or digital data. In an exemplary embodiment, the analyzing means 1 and/or the processing means 2 might be located at different computer centers whereby the determination means 24 and/or estimation means 25 is located on a single computer or even a mobile device.

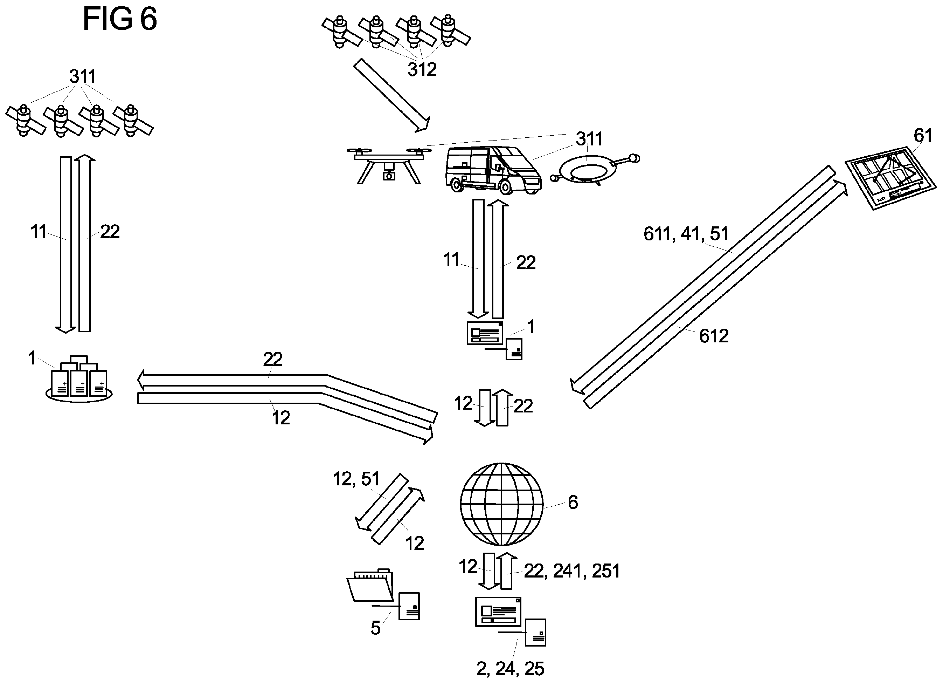

A further embodiment is shown in figure 6. The system comprises satellites 311 connected to the processing means 1 whereby the satellites 311 are configured to receive the signal 22 from the processing means 1 and to collect geo-spatial data 11 if the signal 22 is received. Further, the satellites 311 are configured to transmit the collected geo-spatial data 11 to the processing means 1. Thereby, the signal 22 might comprises information regarding the area further the geo-spatial data 11' should be collected of. Exemplarily, those information are the geo-spatial data to be replaced 241. Furthermore, the signal 22 quality might comprise the quality parameter 251 such as the resolution the collected geo-spatial data 11 should exhibit.

Additionally, the system shown in figure 6 comprises a plurality of UAVs 311 and cars 311 which are configured to receive navigation signals 312 in order to navigate autonomously to specific areas, of which the further geo-spatial data 11' should be collected of and collect said geo-spatial data 11. Thereby, the specific areas might be connected to geo-spatial data to be replaced 241. The UAVs 311 and cars 311 are connected to a further processing means 1 whereby the UAVs 311 and cars 311 are configured to receive the signal 22 from the further processing means 1 and to collect geo-spatial data 11 if the signal 22 is received. Thereby, the signal 22 might comprises information regarding the area the further geo-spatial data 11' should be collected of.

Both the processing means 1 and the further processing means 1 are connected via a decentralized data and signal connection, which is referred to as cloud 6, with the combined analyzing means 2, determining means 24 and estimating means 25. In an exemplary embodiment said combined means 2, 24, 25 are represented by a single computer. Both processing means 1 are configured to transmit the derived spatial object representation 12 to the combined means 2, 24, 25 and to forward the signal 22 from the analyzing means 2 to the geo-spatial data collection means 311. Thereby, the signal 22 might include the geo-spatial data to be replaced 241 as well as the quality parameters 251.

Furthermore, the system comprises a storage 5 for storing spatial object representations 12, whereby the storage 5 is connected with the cloud 6 and configured to receive the spatial object representations 12 of the analyzing means 2 if the quality condition is fulfilled. In addition, the storage 5 might be configured to receive a request signal 51 via the cloud 6 and to transmit at least parts of the stored spatial object representations 12 to a user via the cloud 6. For this purpose, the cloud is connected to a user interface 61 via which the user might send a user input 611 and receive requested data 612. The user input 611 might include validation of spatial object representation 12 in order to provide the training data set 41. The user input 611 might further include a request signal 51 requesting certain parts of the spatial object representations 12 stored in the storage 5. Such a request signal 51 might be forwarded to the storage via the cloud 6. Alternatively or additionally, if certain parts of the spatial object representations 12 are not stored in the storage, the user input 611 might include the signal 22 which is forward to the geo-spatial data collection means 311 in order to initialize them to collect said certain parts of the spatial object representations 12.

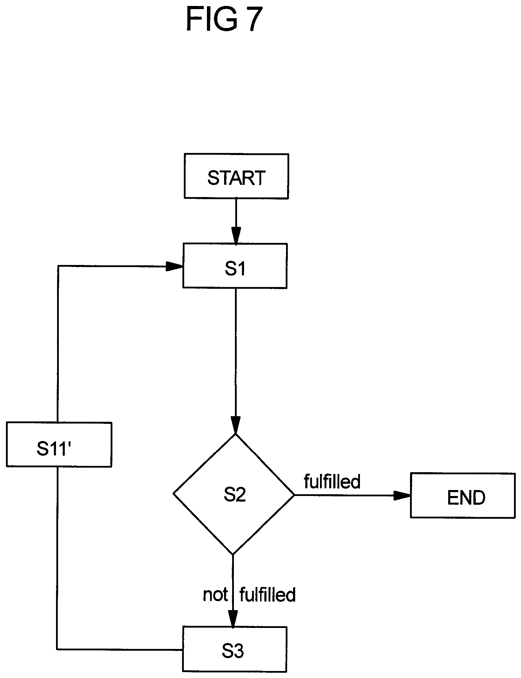

Figure 7 shows a first embodiment of the proposed method. After a start of the proposed method, spatial object representations 12 are derived via a processing S1 of at least parts of the geo-spatial data 11 using the processing means 1. Subsequently, the analyzing means 2 are used for analyzing S2 whether the quality condition of the derived spatial object representations 12 is fulfilled. If said quality condition is fulfilled the method ends. Otherwise, the geo-spatial data collecting means 311 are used for collecting S3 of further geo-spatial data 11' which again are provided for the step of processing S1. Thus, the processing S1, the analyzing S2 and the collecting S3 might be performed iteratively until the quality condition is fulfilled. Thereby, the number of performed cycles is not limited.

However, this embodiment assumes that at a time of start already geo-spatial data 11 are available such that the processing S1 can derive spatial object representations 12 initiating the further procedure. Such geo-spatial data 11 which are available independently of the step of collecting S3 might be stored geo-spatial data 11 such as geographical maps. In one embodiment the analyzing means 1 comprises a storage on which said geographical maps are stored.

In general, the proposed method can alternatively start with the step of collecting S3. Thus, if no geo-spatial data 11 are available after the start, the geo-spatial data 11 and/or the further geo-spatial data 11' are collected via the geo-spatial data collection means 311. Subsequently, spatial object representations 12 are derived via the processing S1 of at least parts of the geo-spatial data 11 and/or the further geo-spatial data 11' using the processing means 1. Then, the analyzing means 2 are used for analyzing S2 whether the quality condition of the derived spatial object representations 12 is fulfilled. If said quality condition is fulfilled the method ends. Otherwise, the geo-spatial data collecting means 311 are used for collecting S3 further geo-spatial data 11' which again are provided for the step of processing S1.

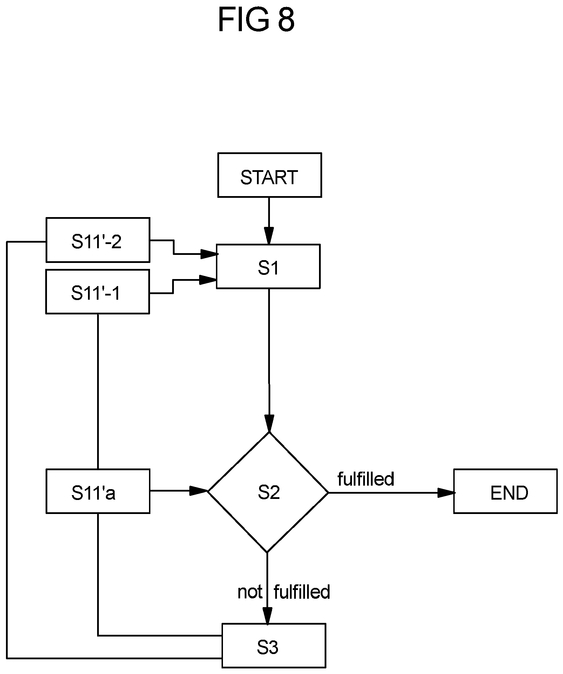

In another embodiment shown in figure 8 the proposed method is configured for providing further geo-spatial data S11' of two different kinds. Thus, the method comprises providing first further geo-spatial data S11'-1 and second further geo-spatial data S11'-2. The first and second further geo-spatial data 11'-1, 11'-2 might differ with respect to the measurement techniques which are used to collect the respective data. Thus, within one collection iteration different further geo-spatial data 11'-1, 11'-2 might be collected in order to improve the result of the processing S1. For example, the quality condition such as the confidence might be improved. Exemplarily, the first further geo-spatial data 11'-1 can be collected using an electromagnetic measurement of the visible portion of the spectrum while the second further geo-spatial data 11'-2 can be collected using radar.

The embodiment shown in figure 8 is further configured for providing of metadata S11'a, whereby the metadata 11a of the geo-spatial data 11 and/or the first further geo-spatial data 11'-1 are provided for the analyzing means 2. Regarding this embodiment, after a start the spatial object representations 12 are derived via a processing S1 of at least parts of the geo-spatial data 11 and/or the first further geo-spatial data 11'-1 using the processing means 1. Subsequently, the analyzing means 2 are used for analyzing S2 whether the quality condition of the derived spatial object representations 12 is fulfilled. If said quality condition is fulfilled the method ends. Otherwise, the geo-spatial data collecting means 311 are used for collecting S3 the first further geo-spatial data 11'-1, whereby the metadata 11a of said first further geo-spatial data 11'-1 can be provided for the analyzing means 2 and the first further geo-spatial data 11'-1 are provided for the step of processing S1. Thus, even before the spatial object representations 12 are derived via the processing S1 it might be checked whether the quality condition is fulfilled.

In an alternative embodiment, also metadata 11a of the second further geo-spatial data 11'-2 might be provided for the analyzing means 2.

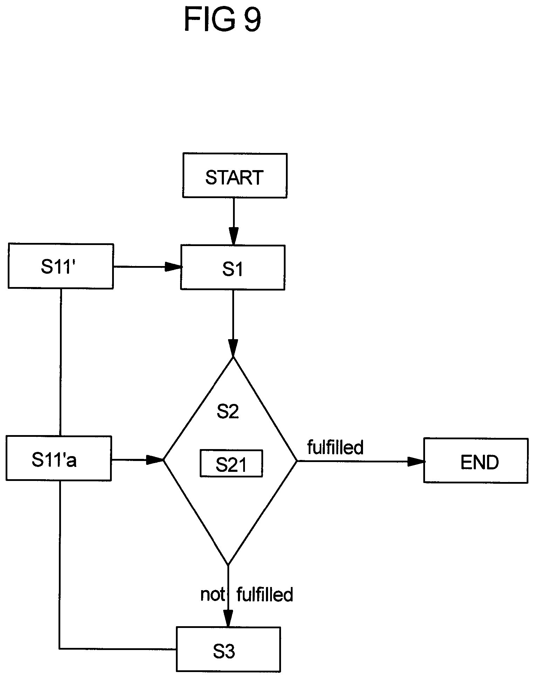

In another embodiment shown in figure 9 the analyzing S2 comprises an analyzing of a constraint S21 whereby the quality condition is subject to at least one verifiable constraint 21 which is verifiable via the analyzing means 2. Exemplarily, via the constraint 21 it can be verified whether a resolution of the geo-spatial data 11 and/or the further geo-spatial data 11' or the spatial object representation 12 is finer than or identical to a threshold resolution. Otherwise, the quality condition is not fulfilled.

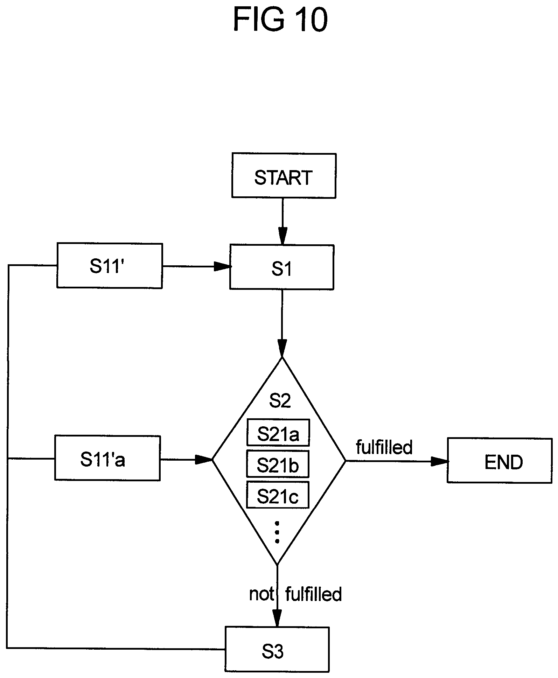

In another embodiment shown in figure 10 the analyzing S2 comprises a plurality of analyzing steps regarding the constraints S21a, S21b, S21c whereby the quality condition is subject to the plurality of constraints 21a, 21b, 21c which are verifiable via the analyzing means 2. Only if all constraints 21a, 21b, 21c are verified the quality condition of the spatial object representations 12 is fulfilled. The plurality of constraints 21a, 21b, 21c has not necessarily to be verified sequentially. Embodiments of the proposed method might also verify all or some of the plurality of constraints 21a, 21b, 21c at the same time. Thereby, the proposed method is not limited to a certain number of constraints 21a, 21b, 21c.

In another additional or alternative embodiment the analyzing S2 comprises analyzing a date. Thereby, the date is a date of recording the geo-spatial data 11 and/or the further geo-spatial data 11' from which the spatial object representations 12 are derived. This means that via the analyzing S1 it is verified whether the date of recording is younger than or identical to a threshold date. Otherwise, the quality condition would not be fulfilled.

In yet another additional or alternative embodiment t the analyzing S2 comprises analyzing an extension. Thereby, the extension is a spatial extension of a grid the geo-spatial data 11 and/or the further geo-spatial data 11' and/or spatial object representations 12 are distributed on. In this embodiment the grid represents the set of all points the geo-spatial data 11 and/or the further geo-spatial data 11' and/or spatial object representations 12 are connected to.

However, in any case an embodiment comprises the analyzing 2 including a plurality of analyzing different constraints S21, the quality condition is only fulfilled if all constraints 21 are verified.

In an additional embodiment some or all of the at least one threshold can be changed during at least one iteration of the cycle of processing S1, analyzing S2 and collecting S3. In an exemplary embodiment a resolution threshold of the geo-spatial data 11 and/or the further geo-spatial data 11' can be changed to increasingly finer resolutions with each iteration. Further exemplary, different geo-spatial data 11 can be collected in each iteration. Thus, coarse resolved satellite data 11 can be used to derive coarse resolved objection representations 12 of a large area in a first iteration. Subsequently, finer resolved geo-spatial data 11 of UAVs can be used to derive finer resolved spatial object representation 12 of parts of the large area. However, in each iteration the resolution of the collected geo-spatial data 11 can be verified to reach at least an iteration specific resolution threshold

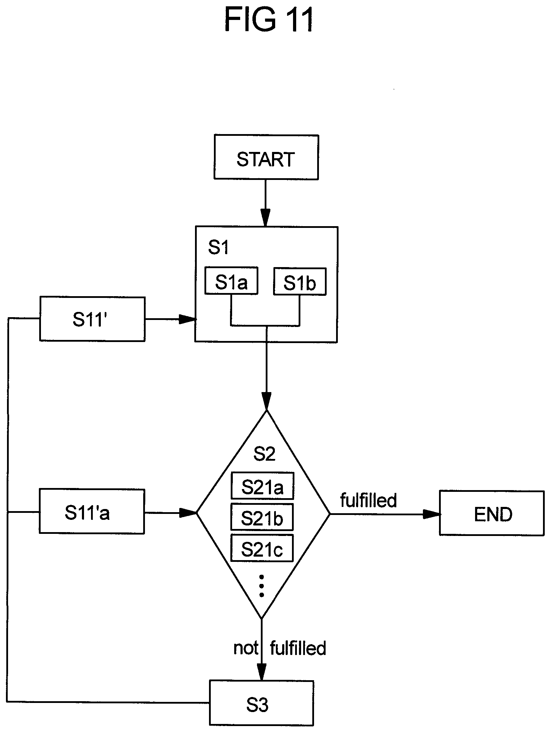

In another embodiment shown in figure 11 the processing S1 comprises at least a first and second processing S21a, S21b of the geo-spatial data 11 and/or the further geo-spatial data 11' by the at least one processing means 1. Via each of the two processings S1a, S1b one spatial object representations 12 is derived. In the depicted embodiment it is assumed that the derived spatial object representations 12a, 12b differ based on the used first or second processing S1a, S1b. Further, the processing S1 provides an average spatial object representation 12. Via the quality condition a plurality of constraints 21 is checked. If one of the constraints 21 cannot be verified the collecting S3 is initiated in order to collect further geo-spatial data 11' via the geo-spatial data collection means 311. Thereby, the number of constrains 21 is not limited. In alternative embodiment, only one constraint 21 is used.

The average spatial object representation 12 is not necessarily an arithmetic average. In some embodiments the average spatial object representation 12 can be a weighted mean value of the different spatial object representations 12a, 12b. However, in principle the average spatial object representation 12 only refers to a mathematical object which is derived from the plurality of different spatial object representations 12a, 12b. Thereby, the mathematical object is not limited to be result of a linear mapping.

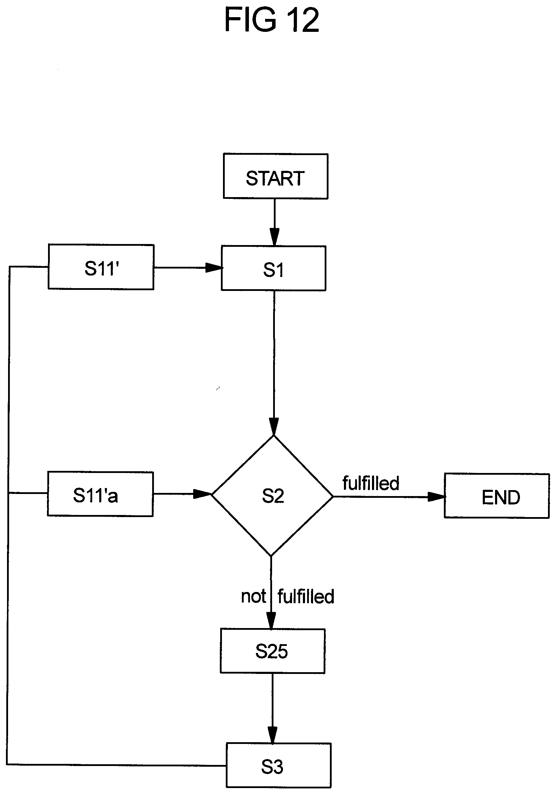

In an embodiment shown in figure 12 the proposed method comprises an estimating S25 of a set of quality parameters 251 via the estimation means 25, whereby said quality parameters 251 are defined such that spatial object representations 12 derived from geo-spatial data 11 exhibiting said quality parameters 251 fulfill the quality condition. Regarding this embodiment, after a start the spatial object representations 12 are derived via a processing S1 of at least parts of the geo-spatial data 11 and/or the further geo-spatial data 11' using the processing means 1. Subsequently, the analyzing means 2 are used for analyzing S2 whether the quality condition of the derived spatial object representations 12 is fulfilled. If said quality condition is fulfilled the method ends. Otherwise, the estimation means 25 are used for estimating S25 the quality parameters 251 based on the spatial object representation 12 and the quality condition. In the next step, the geo-spatial data collecting means 311 are used for collecting S3 further geo-spatial data 11' corresponding to said quality parameters 251 whereby the metadata 11a of said geo-spatial data 11 can be provided for the analyzing means 2 and the further geo-spatial data 11' are provided for the step of processing S1. Thus, the number of necessary iterations in order to derive spatial object representations 12 fulfilling the quality condition can be reduced.

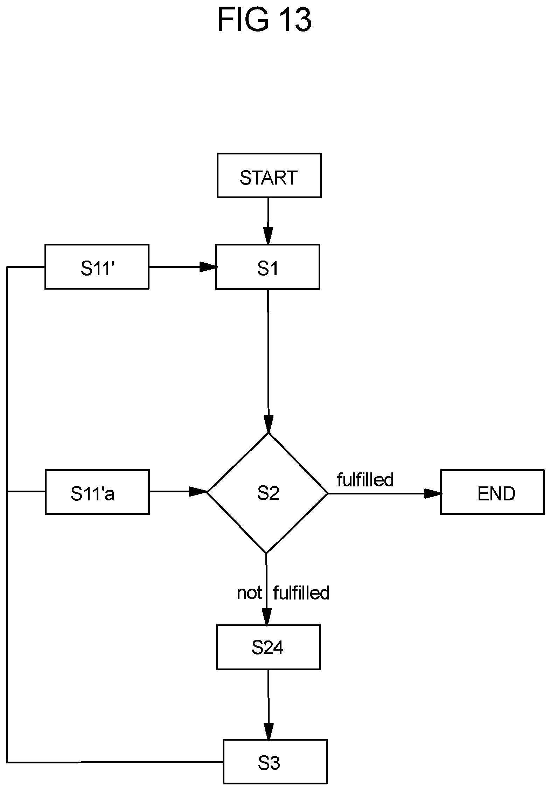

In an embodiment shown in figure 13 the proposed method comprises a determining S24 of geo-spatial data to be replaced 211 with the determination means 24. Thereby the geo-spatial data to be replaced 211 represent the part of the geo-spatial data 11 and/or the further geo-spatial data 11' from which the spatial object representations 12 are derived which does not fulfill the quality condition.

In particular this means that embodiments via the determining S24 can be configured to detect the causative parts of the geo-spatial data 11 and/or the further geo-spatial data 11' leading to spatial object representations 12 which do not fulfill the quality condition. Thus, the part of the geo-spatial data 11 and/or the further geo-spatial data 11' which has to be replaced can be reduced.

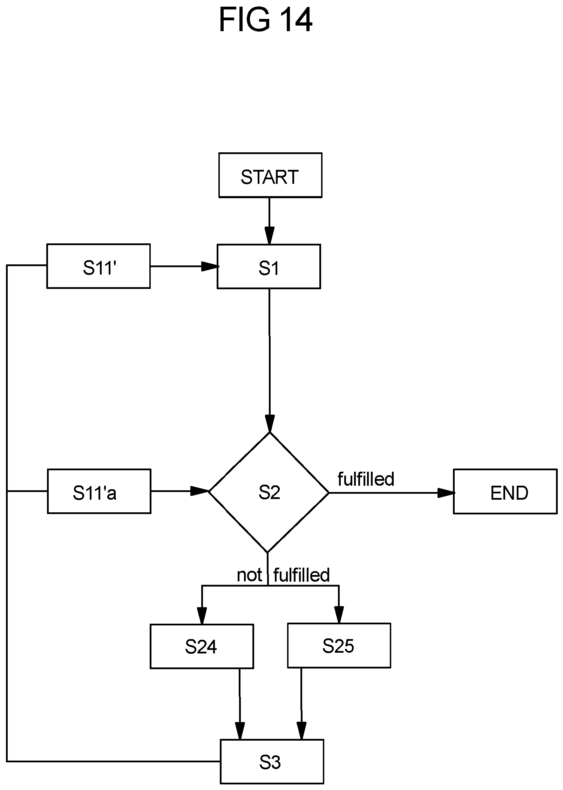

Figure 14 shows an alternative embodiment of the proposed method comprising the determining S24 as well as the estimating S25. Thus, the proposed method is configured to detect the causative parts of the geo-spatial data 11 and/or the further geo-spatial data 11' leading to spatial object representations 12 not fulfilling the quality condition as well as to estimate the quality parameters 251 which would lead to geo-spatial data 11 fulfilling the quality condition. Consequently, the geo-spatial data collection means 311 can be initiated for collecting S3 further geo-spatial data 11' spatially corresponding to the geo-spatial data to be replaced 241 but with the estimated quality parameters 251. Hence, both the part of the geo-spatial data 11 and/or the further geo-spatial data 11' which has to be replaced as well as the number of necessary iterations in order to derive spatial object representations 12 fulfilling the quality condition can be reduced.

In a development of any above-mentioned embodiment the geo-spatial data 11 and/or the further geo-spatial data 11' can be collected by an UAV and/or a satellite and/or a plane and/or a helicopter and/or a balloon and or a HAPS. Thereby a combination can enable the method to most appropriately collect geo-spatial data 11 in particular if the collected data is meant to replace some geo-spatial data to be replaced 241. Thereby, using a combination of UAV, satellite and plane data some emergence effects can occur. Thus, in one exemplary embodiment it is possible to use satellite data to provide spatial object representations 12 of large areas with reduced resolution. In a next step, processing S1 might reveal a kind of relevant spatial object representations 12 such as vegetation in a bad condition to be present only in some subareas. In a further subsequent step, via the analyzing S2 it is verified whether the quality condition is fulfilled. Thus, it could be the result that due to the reduced resolution of the geo-spatial data 11 and/or the further geo-spatial data 11' the spatial object representations 12 are also provided in a resolution lower than resolution threshold. Via the determining S24 the parts of the spatial data 12 connected to said subareas would be determined to be geo-spatial data to be replaced 241. Thus, the estimating S25 can provide quality parameters 251 indicating a resolution of geo-spatial data 11 which would be necessary to derive spatial object representations 12 with the resolution threshold. Now, exemplarily by initiating UAVs the method can collects geo-spatial data 11 of higher resolution only of the subareas in the relevant spatial object representations 12 are detected by use of the primary satellite-based data. Thus, the proposed solution can provide a detailed evaluation simultaneously avoiding unnecessary and expensive large-scale aircraft or helicopter overflights or manual testing.

Embodiments of the method may use artificial intelligence techniques for processing S1 the geo-spatial data 11 and/or the further geo-spatial data 11'. In particular, artificial neural networks can be used. Thus, the processing S1 can be configured to be trainable with respect to the capability of deriving spatial object representations 12 from the geo-spatial data 11 and/or the further geo-spatial data 11'. Thus, the use of an artificial intelligence technique can entail the benefit of continuous improvement of the processing S1 quality which refers to the probability with which the derived spatial object representations 12 hold. This corresponds to a confidence value of the derived spatial object representations 12. In some embodiments of the proposed solution this confidence value is one element of the quality condition.

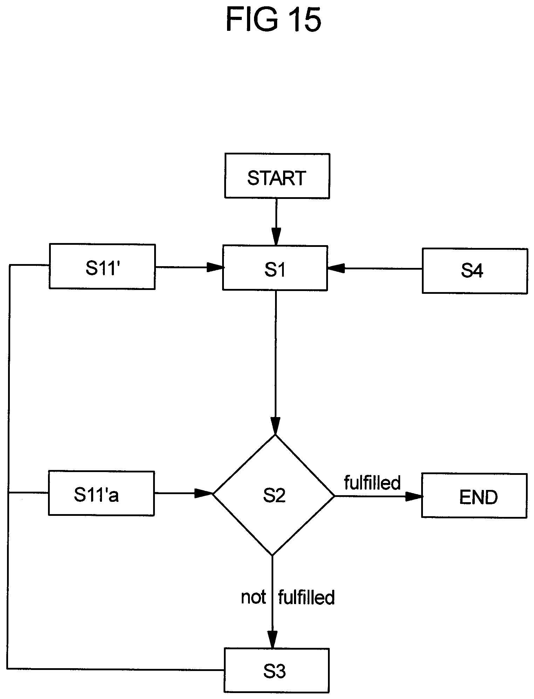

In figure 15 a further embodiment of the proposed method is shown comprising a step of training S4 with a training data set 41. Thereby, the training data set 41 comprises geo-spatial data 11 with associated spatial object representations 12 and is used corresponding to a supervised learning approach. In principle, the training S4 can be performed during every step of the proposed method.

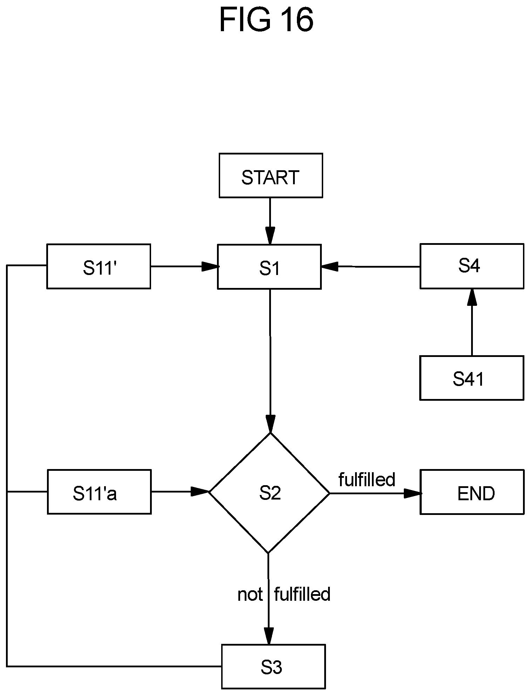

In an embodiment shown in figure 16 the training data set 41 can be provided via a validation S41 of at least parts of the spatial object representations 12 by a user. Thus, the user can use digital devices such as smartphones or laptops to validate whether spatial object representations 12 coincide with the represented objects on the Earth's surface. Consequently, the spatial object representations 12 can be validated via input from a mobile app on-site. By comparing the derived spatial object representations 12 with ground-level user data, it is possible to provide further training data sets 41 to further improve the quality of the processing S1.

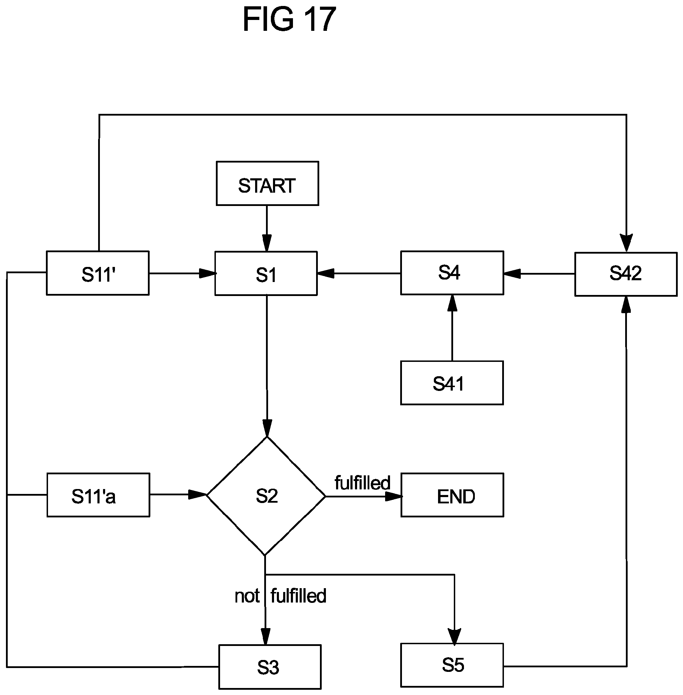

Figure 17 represents another possible embodiment regarding the step of training S4 with a training data set 41. Accordingly, the method comprises determining annotation parameters S5 after the quality condition is not fulfilled. Thereby, it might be determined what kind of parameters has to be manually annotated in order to provide a training data set 41. Those parameters might include areas, objects or the number of annotations which have to be annotated or reannotated. In a subsequent step of providing annotations S42 further geo-spatial data 11' are manually annotated regarding those parameters. Therefore, further geo-spatial data 11' provided via the step of providing further geo-spatial data S11' are used.

### Reference Numerals

S1 processing
S1a first processing
S1b second processing
S11' providing further geo-spatial data
S11'-1 providing first further geo-spatial data
S11'-2 providing second further geo-spatial data
S11'a providing metadata of further geo-spatial data
S2 analyzing
S21 analyzing constraint
S21a analyzing first constraint
S21b analyzing second constraint
S21c analyzing third constraint
S24 determining of geo-spatial data to be replaced
S25 estimating a set of quality parameters
S3 collecting
S4 training
S41 validating
S42 providing annotations
S5 determining annotation parameter
1 processing means
11 geo-spatial data
11' further geo-spatial data
11'-1 first further geo-spatial data
11'-2 second further geo-spatial data
11a metadata
12 spatial object representations
12a first spatial object representations
12b second spatial object representations
121 first group of spatial object representations
122 second group of spatial object representations
123 third group of spatial object representations
2 analyzing means
21 constraint
21a first constraint
21b second constraint
21c third constraint
22 signal
24 determination means
241 geo-spatial data to be replaced
25 estimation means
251 quality parameters
311 geo-spatial data collection means
312 navigation signal
41 training data set
5 storage
51 request signal
6 cloud
61 user interfaces
611 user input
612 requested data
P computer program

## Claims

1. A method for analyzing geo-spatial data (11, 11') comprising:
a. Processing (S1) at least parts of the geo-spatial data (11) to derive spatial object representations (12);
b. Collecting (S3) further geo-spatial data (11') if a quality condition of the spatial object representations (12) is not fulfilled,
**characterized in that**,
the quality condition comprises a confidence value representing a probability with which the spatial object representations (12) correspond to represented objects, wherein the confidence value is derived by comparing spatial object representations (12) of the same object derived by processing the geo-spatial data (11) with a plurality of techniques, wherein small differences between said different spatial object representations (12) point to a large confidence value and vice versa.

2. The method of claim 1, **characterized in that** the geo-spatial data (11) and / or the further geo-spatial data (11') are image data of at least on object whereby the image data show a part of the Earth's surface.

3. The method of claim 1 or 2, **characterized in that**, the object representations (12) are spatially distributed but not necessarily connected.

4. The method of any of claims 1 to 3, **characterized in that**, the object representations (12) represents at least in parts stationary and/or moving objects such as pipelines, powerlines, railways, roads, buildings, mining sites, dams, construction sites, industrial facilities or vegetation.

5. The method of any of claims 1 to 4, **characterized in that**, the processing (S1) of the geo-spatial data (11) and / or the further geo-spatial (11') uses an artificial intelligence technique, wherein optionally the artificial intelligence technique uses an artificial neural network.

6. The method of any preceding claim, **characterized in that**, the collecting (S3) of geo-spatial data (11) includes an automated initiating whereby geo-spatial data collection means (311) configured to collect geo-spatial data (11) and / or the further geo-spatial data (11') are initiated to collect the further geo-spatial data (11') in response to the fact that the quality condition is not fulfilled.

7. The method of any of the preceding claims, **characterized in that** measurement techniques of the further geo-spatial data (11') is of a different kind than the measurement techniques of the geo-spatial data (11).

8. The method of any preceding claim, **characterized in that**, the geo-spatial data (11) and / or the further geo-spatial data (11') represent gravimetric or electromagnetic measurements in particular LIDAR, optical, RADAR, multispectral or hyperspectral measurements.

9. The method of any preceding claim, **characterized in that**, the geo-spatial data (11) and / or the further geo-spatial data (11') are collected by an unmanned aerial vehicle, a satellite, a plane, a helicopter, a balloon or a high-altitude pseudo satellite.

10. A system for analyzing geo-spatial data (11, 11') regarding spatial object representations (12), comprising:
- a processing means (1) configured to derive spatial object representations (12) from at least parts of said geo-spatial data (11);
- an analyzing means (2) configured to test whether a quality condition of said spatial object representations (12) is fulfilled; and
- a geo-spatial data collection means (311) configured to collect further geo-spatial data (11') if said quality condition is not fulfilled,
**characterized in that**,
the analyzing means (2) is configured to test a confidence value representing a probability with which the spatial object representations (12) correspond to represented objects, wherein the analyzing means (2) is configured to derive the confidence value by comparing spatial object representations (12) of the same object derived by processing the geo-spatial data (11) with a plurality of techniques, wherein small differences between said different spatial object representations (12) point to a large confidence value and vice versa.

11. The system of claim 10, **characterized in that**, the processing means (1) is configured to derive spatial object representations (12) from images of at least on object whereby the images shows a part of the Earth's surface.

12. The system of claim 10 or 11, **characterized in that**, the spatial object representations (12) represents at least in parts stationary and/or moving objects such as pipelines, powerlines, railways, roads, buildings, mining sites, dams, construction sites, industrial facilities or vegetation.

13. The system of any of claims 10 to 12, **characterized in that**, the processing means (1) comprises an artificial intelligence technique, wherein optionally the artificial intelligence technique comprises an artificial neural network.

14. The system of any of claims 10 to 13, **characterized in that**, the analyzing means (2) is configured to test whether a predetermined set of at least one constraint (21) regarding said quality condition is fulfilled.

15. The system of claim 14, **characterized in that**, the analyzing means (2) is configured to compare the at least one quality condition with at least one threshold in order to test whether the constraint (21) is fulfilled, wherein optionally the system is configured to change the at least one threshold.

16. The system of any of claims 10 to 15, **characterized in that**, the system further comprises an estimation means (25) configured to estimate a set of quality parameters (251) of the geo-spatial data (11) such that spatial object representations (12) derived from geo-spatial data (11) and / or the further geo-spatial data (11') exhibiting said quality parameters (251) fulfill the quality condition.

17. The system of any of claims 10 to 16, **characterized in that**, the geo-spatial data collection means (311) is configured to be automatically initiated if said quality condition is not fulfilled.

18. The system of any of claims 10 to 17, **characterized in that** measurement techniques of the further geo-spatial data (11') is of a different kind than the measurement techniques of the geo-spatial data (11).

19. The system of claim 10 or 18, **characterized in that**, the geo-spatial data collection means (311) is configured to use gravimetric or electromagnetic measurements in particular LIDAR, optical, RADAR, multispectral or hyperspectral measurements.

20. The system of claim 10 or 19, **characterized in that**, the geo-spatial data collection means (311) is an unmanned aerial vehicle, a satellite, a plane, a helicopter, a balloon or a high-altitude pseudo satellite.

21. A computer program (P) for analyzing geo-spatial data (11, 11'), the computer program (P) being storable on a storage means of a computer and comprises machine code instructions executable by a processor of the computer, if the processor executes the machine code instructions it causes the computer to perform a method as claimed in any of claims 1 to 9.

## Patentansprüche

1. Verfahren zur Analyse von Geodaten (11, 11'), mit den folgenden Schritten:
a. Verarbeitung (S1) zumindest von Teilen der Geodaten (11) zur Ableitung von räumlichen Objektdarstellungen (12);
b. Erfassen (S3) weiterer Geodaten (11'), wenn eine Qualitätsbedingung der räumlichen Objektdarstellungen (12) nicht erfüllt ist,
**dadurch gekennzeichnet, dass**
die Qualitätsbedingung einen Konfidenzwert umfasst, der eine Wahrscheinlichkeit darstellt, mit der die räumlichen Objektdarstellungen (12) dargestellten Objekten entsprechen, wobei der Konfidenzwert durch Vergleichen von räumlichen Objektdarstellungen (12) desselben Objekts abgeleitet wird, das durch Verarbeiten der Geodaten (11) mit einer Vielzahl von Techniken abgeleitet wurde, wobei kleine Unterschiede zwischen den verschiedenen räumlichen Objektdarstellungen (12) auf einen großen Konfidenzwert hindeuten und umgekehrt.

2. Verfahren nach Anspruch 1, **dadurch gekennzeichnet, dass** die Geodaten (11) und/oder die weiteren Geodaten (11') Bilddaten mindestens eines Objektes sind, wobei die Bilddaten einen Teil der Erdoberfläche zeigen.

3. Verfahren nach Anspruch 1 oder 2, **dadurch gekennzeichnet, dass** die Objektdarstellungen (12) räumlich verteilt, aber nicht zwangsläufig verbunden sind.

4. Verfahren nach einem der Ansprüche 1 bis 3, **dadurch gekennzeichnet, dass** die Objektdarstellungen (12) wenigstens teilweise stationäre und/oder bewegte Objekte wie Pipelines, Stromleitungen, Eisenbahnen, Straßen, Gebäude, Bergbaustandorte, Dämme, Baustellen, Industrieanlagen oder Vegetation darstellen.

5. Verfahren nach einem der Ansprüche 1 bis 4, **dadurch gekennzeichnet, dass** die Verarbeitung (S1) der Geodaten (11) und/oder der weiteren Geodaten (11') eine Technik der künstlichen Intelligenz verwendet, wobei die Technik der künstlichen Intelligenz optional ein künstliches neuronales Netz verwendet.

6. Verfahren nach einem der vorhergehenden Ansprüche, **dadurch gekennzeichnet, dass** das Erfassen (S3) von Geodaten (11) ein automatisches Auslösen umfasst, wobei Geodatenerfassungsmittel (311), die dazu ausgebildet sind, Geodaten (11) und/oder die weiteren Geodaten (11') zu erfassen, veranlasst werden, die weiteren Geodaten (11') in Reaktion auf die Tatsache zu erfassen, dass die Qualitätsbedingung nicht erfüllt ist.

7. Verfahren nach einem der vorhergehenden Ansprüche, **dadurch gekennzeichnet, dass** Messtechniken der weiteren Geodaten (11') von einer anderen Art sind als die Messtechniken der Geodaten (11).

8. Verfahren nach einem der vorhergehenden Ansprüche, **dadurch gekennzeichnet, dass** die Geodaten (11) und/oder die weiteren Geodaten (11') gravimetrische oder elektromagnetische Messungen darstellen, insbesondere LIDAR-, optische, RADAR-, multispektrale oder hyperspektrale Messungen.

9. Verfahren nach einem der vorhergehenden Ansprüche, **dadurch gekennzeichnet, dass** die Geodaten (11) und/oder die weiteren Geodaten (11') von einem unbemannten Luftfahrzeug, einem Satelliten, einem Flugzeug, einem Hubschrauber, einem Ballon oder einem Pseudosatelliten in großer Höhe erfasst werden.

10. System zur Analyse von Geodaten (11, 11') in Bezug auf räumliche Objektdarstellungen (12), umfassend:
- ein Verarbeitungsmittel (1), das dazu ausgebildet ist, räumliche Objektdarstellungen (12) zumindest von Teilen der Geodaten (11) abzuleiten;
- ein Analysemittel (2), das dazu ausgebildet ist, zu prüfen, ob eine Qualitätsbedingung der räumlichen Objektdarstellungen (12) erfüllt ist; und
- ein Geodatenerfassungsmittel (311), das dazu ausgebildet ist, weitere Geodaten (11') zu erfassen, wenn die Qualitätsbedingung nicht erfüllt ist,
**dadurch gekennzeichnet, dass**
das Analysemittel (2) dazu ausgebildet ist, einen Konfidenzwert zu prüfen, der eine Wahrscheinlichkeit darstellt, mit der die räumlichen Objektdarstellungen (12) dargestellten Objekten entsprechen, wobei das Analysemittel (2) dazu ausgebildet ist, den Konfidenzwert durch Vergleichen von räumlichen Objektdarstellungen (12) desselben Objekts abzuleiten, indem die Geodaten (11) mit einer Vielzahl von Techniken verarbeitet werden, wobei kleine Unterschiede zwischen den verschiedenen räumlichen Objektdarstellungen (12) auf einen großen Konfidenzwert hindeuten und umgekehrt.

11. System nach Anspruch 10, **dadurch gekennzeichnet, dass** das Verarbeitungsmittel (1) dazu ausgebildet ist, räumliche Objektdarstellungen (12) von Bildern wenigstens eines Objektes abzuleiten, wobei die Bilder einen Teil der Erdoberfläche zeigen.

12. System nach Anspruch 10 oder 11, **dadurch gekennzeichnet, dass** die räumlichen Objektdarstellungen (12) wenigstens teilweise stationäre und/oder bewegte Objekte wie Pipelines, Stromleitungen, Eisenbahnen, Straßen, Gebäude, Bergbaustandorte, Dämme, Baustellen, Industrieanlagen oder Vegetation darstellen.

13. System nach einem der Ansprüche 10 bis 12, **dadurch gekennzeichnet, dass** das Verarbeitungsmittel (1) eine Technik der künstlichen Intelligenz umfasst, wobei die Technik der künstlichen Intelligenz optional ein künstliches neuronales Netz umfasst.

14. System nach einem der Ansprüche 10 bis 13, **dadurch gekennzeichnet, dass** das Analysemittel (2) dazu ausgebildet ist, zu prüfen, ob ein vorbestimmter Satz von mindestens einer Randbedingung (21) bezüglich der Qualitätsbedingung erfüllt ist.

15. System nach Anspruch 14, **dadurch gekennzeichnet, dass** das Analysemittel (2) dazu ausgebildet ist, die mindestens eine Qualitätsbedingung mit mindestens einem Schwellenwert zu vergleichen, um zu prüfen, ob die Randbedingung (21) erfüllt ist, wobei das System optional dazu ausgebildet ist, den mindestens einen Schwellenwert zu ändern.

16. System nach einem der Ansprüche 10 bis 15, **dadurch gekennzeichnet, dass** das System ferner ein Schätzmittel (25) umfasst, das dazu ausgebildet ist, einen Satz von Qualitätsparametern (251) der Geodaten (11) zu schätzen, sodass räumliche Objektdarstellungen (12), die von Geodaten (11) und/oder den weiteren Geodaten (11'), die die Qualitätsparameter (251) zeigen, abgeleitet sind, die Qualitätsbedingung erfüllen.

17. System nach einem der Ansprüche 10 bis 16, **dadurch gekennzeichnet, dass** das Geodatenerfassungsmittel (311) dazu ausgebildet ist, automatisch ausgelöst zu werden, wenn die Qualitätsbedingung nicht erfüllt ist.

18. System nach einem der Ansprüche 10 bis 17, **dadurch gekennzeichnet, dass** Messtechniken der weiteren Geodaten (11') von einer anderen Art sind als die Messtechniken der Geodaten (11).

19. System nach Anspruch 10 oder 18, **dadurch gekennzeichnet, dass** das Geodatenerfassungsmittel (311) dazu ausgebildet ist, gravimetrische oder elektromagnetische Messungen, insbesondere LIDAR-, optische, RADAR-, multispektrale oder hyperspektrale Messungen zu verwenden.

20. System nach Anspruch 10 oder 19, **dadurch gekennzeichnet, dass** das Geodatenerfassungsmittel (311) ein unbemanntes Luftfahrzeug, ein Satellit, ein Flugzeug, ein Hubschrauber, ein Ballon oder ein Pseudosatellit in großer Höhe ist.

21. Computerprogramm (P) zum Analysieren von Geodaten (11, 11'), wobei das Computerprogramm (P) auf einem Speichermittel eines Computers speicherbar ist und Maschinencodebefehle umfasst, die von einem Prozessor des Computers ausführbar sind, wobei der Prozessor, wenn er die Maschinencodebefehle ausführt, den Computer veranlasst, ein Verfahren nach einem der Ansprüche 1 bis 9 durchzuführen.

## Revendications

1. Procédé d'analyse de données géospatiales (11, 11') comprenant :
a. Traitement (S1) d'au moins une partie des données géospatiales (11) pour dériver des représentations d'objets spatiaux (12) ;
b. Collecte (S3) d'autres données géospatiales (11') si une condition de qualité de la représentations d'objets spatiaux (12) n'est pas remplie,
**caractérisé en ce que**
la condition de qualité comprend une valeur de confiance représentant une probabilité avec laquelle les représentations d'objets spatiaux (12) correspondent aux objets représentés, la valeur de confiance étant dérivée en comparant des représentations d'objets spatiaux (12) du même objet dérivées par le traitement des données géospatiales (11) à l'aide d'une pluralité de techniques, de petites différences entre ces différentes représentations d'objets spatiaux (12) indiquant une grande valeur de confiance, et vice versa.

2. Procédé selon la revendication 1, **caractérisé en ce que** les données géospatiales (11) et/ou les autres données géospatiales (11') sont des données d'image d'au moins un objet, les données d'image montrant une partie de la surface de la Terre.

3. Procédé selon la revendication 1 ou 2, **caractérisé en ce que** les représentations d'objets (12) sont distribuées dans l'espace mais pas nécessairement connectées.

4. Procédé selon l'une quelconque des revendications 1 à 3, **caractérisé en ce que** les représentations d'objets (12) représentent au moins en partie des objets stationnaires et/ou mobiles tels que des pipelines, des lignes électriques, des chemins de fer, des routes, des bâtiments, des sites miniers, des barrages, des chantiers de construction, des installations industrielles ou de la végétation.

5. Procédé selon l'une quelconque des revendications 1 à 4, **caractérisé en ce que** le traitement (S1) des données géospatiales (11) et/ou des autres données géospatiales (11') utilise une technique d'intelligence artificielle, dans laquelle la technique d'intelligence artificielle utilise éventuellement un réseau neuronal artificiel.

6. Procédé selon l'une quelconque des revendications précédentes, **caractérisé en ce que** la collecte (S3) des données géospatiales (11) comprend une initiation automatisée par laquelle des moyens de collecte de données géospatiales (311) configurés pour collecter des données géospatiales (11) et/ou les autres données géospatiales (11') sont initiés pour collecter les autres données géospatiales (11') en réponse au fait que la condition de qualité n'est pas remplie.

7. Procédé selon l'une quelconque des revendications précédentes, **caractérisé en ce que** les techniques de mesure des autres données géospatiales (11') sont d'un type différent des techniques de mesure des données géospatiales (11).

8. Procédé selon l'une quelconque des revendications précédentes, **caractérisé en ce que** les données géospatiales (11) et/ou les autres données géospatiales (11') représentent des mesures gravimétriques ou électromagnétiques, en particulier des mesures LIDAR, optiques, RADAR, multispectrales ou hyperspectrales.

9. Procédé selon l'une quelconque des revendications précédentes, **caractérisé en ce que** les données géospatiales (11) et/ou les autres données géospatiales (11') sont collectées par un véhicule aérien sans pilote, un satellite, un avion, un hélicoptère, un ballon ou un pseudo-satellite à haute altitude.

10. Système d'analyse de données géospatiales (11, 11') concernant des représentations d'objets spatiaux (12), comprenant :
- un moyen de traitement (1) configuré pour dériver des représentations d'objets spatiaux (12) à partir d'au moins certaines parties desdites données géospatiales (11) ;
- un moyen d'analyse (2) configuré pour tester si une condition de qualité desdites représentations d'objets spatiaux (12) est remplie ; et
- un moyen de collecte de données géospatiales (311) configuré pour collecter d'autres données géospatiales (11') si ladite condition de qualité n'est pas remplie,
**caractérisé en ce que**
le moyen d'analyse (2) est configuré pour tester une valeur de confiance représentant une probabilité avec laquelle les représentations d'objets spatiaux (12) correspondent aux objets représentés, le moyen d'analyse (2) étant configuré pour dériver la valeur de confiance en comparant les représentations d'objets spatiaux (12) du même objet dérivé par le traitement des données géospatiales (11) avec une pluralité de techniques, de petites différences entre lesdites différentes représentations d'objets spatiaux (12) indiquant une grande valeur de confiance et vice-versa.

11. Système selon la revendication 10, **caractérisé en ce que** le moyen de traitement (1) est configuré pour dériver des représentations d'objets spatiaux (12) à partir d'images d'au moins un objet, les images montrant une partie de la surface de la Terre.

12. Système selon la revendication 10 ou 11, **caractérisé en ce que** les représentations d'objets spatiaux (12) représentent au moins en partie des objets stationnaires et/ou mobiles tels que des pipelines, des lignes électriques, des chemins de fer, des routes, des bâtiments, des sites miniers, des barrages, des chantiers de construction, des installations industrielles ou de la végétation.

13. Système selon l'une quelconque des revendications 10 à 12, **caractérisé en ce que** le moyen de traitement (1) comprend une technique d'intelligence artificielle, dans laquelle la technique d'intelligence artificielle comprend éventuellement un réseau neuronal artificiel.

14. Système selon l'une quelconque des revendications 10 à 13, **caractérisé en ce que** le moyen d'analyse (2) est configuré pour tester si un ensemble prédéterminé d'au moins une contrainte (21) concernant ladite condition de qualité est rempli.

15. Système selon la revendication 14, **caractérisé en ce que** le moyen d'analyse (2) est configuré pour comparer l'au moins une condition de qualité à au moins un seuil afin de tester si la contrainte (21) est remplie, le système étant éventuellement configuré pour modifier l'au moins un seuil.

16. Système selon l'une quelconque des revendications 10 à 15, **caractérisé en ce que** le système comprend en outre un moyen d'estimation (25) configuré pour estimer un ensemble de paramètres de qualité (251) des données géospatiales (11) de sorte que les représentations d'objets spatiaux (12) dérivées des données géospatiales (11) et/ou des autres données géospatiales (11') présentant lesdits paramètres de qualité (251) remplissent la condition de qualité.

17. Système selon l'une quelconque des revendications 10 à 16, **caractérisé en ce que** le moyen de collecte de données géospatiales (311) est configuré pour être initié automatiquement si ladite condition de qualité n'est pas remplie.

18. Système selon l'une quelconque des revendications 10 à 17, **caractérisé en ce que** les techniques de mesure des autres données géospatiales (11') sont d'un type différent des techniques de mesure des données géospatiales (11).

19. Système selon la revendication 10 ou 18, **caractérisé en ce que** le moyen de collecte de données géospatiales (311) est configuré pour utiliser des mesures gravimétriques ou électromagnétiques, en particulier des mesures LIDAR, optiques, RADAR, multispectrales ou hyperspectrales.

20. Système selon la revendication 10 ou 19, **caractérisé en ce que** le moyen de collecte de données géospatiales (311) est un véhicule aérien sans pilote, un satellite, un avion, un hélicoptère, un ballon ou un pseudo-satellite à haute altitude.

21. Programme d'ordinateur (P) pour l'analyse de données géospatiales (11, 11'), le programme d'ordinateur (P) étant stockable sur un moyen de stockage d'un ordinateur et comprenant des instructions de code machine exécutables par un processeur de l'ordinateur, si le processeur exécute les instructions de code machine, il amène l'ordinateur à exécuter un procédé tel que revendiqué dans l'une quelconque des revendications 1 à 9.
